Europäisches Patentamt

European Patent Office

Office européen des brevets

(19)

(11) **EP 1 179 544 A1**

(12) **EUROPEAN PATENT APPLICATION**

(43) Date of publication:
**13.02.2002 Bulletin 2002/07**

(51) Int Cl.⁷: $C08F\ 8/00$, $C08K\ 5/14$

(21) Application number: **01118823.2**

(22) Date of filing: **10.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.08.2000 JP 2000243227**
**23.08.2000 JP 2000252304**
**04.09.2000 JP 2000266901**
**04.09.2000 JP 2000266902**
**04.09.2000 JP 2000266903**
**11.10.2000 JP 2000310225**

(71) Applicant: **Grand Polymer Co., Ltd.**
**Tokyo 104-0031 (JP)**

(72) Inventors:
• **Korehisa, Kinzo**
**Sodegaura-shi, Chiba (JP)**
• **Hashimoto, Mikio**
**Sodegaura-shi, Chiba (JP)**
• **Akiyama, Naoya**
**Sodegaura-shi, Chiba (JP)**
• **Wakita, Youichi**
**Sodegaura-shi, Chiba (JP)**

(74) Representative: **HOFFMANN - EITLE**
**Patent- und Rechtsanwälte Arabellastrasse 4**
**81925 München (DE)**

(54) **Modified polypropylene, process for preparing modified polypropylene, modified polypropylene composition and foamed product**

(57)     A modified polypropylene has a melt flow rate of 0.1 to 10 g/10 min, a melt tension of 3 to 20 g and a gel fraction, as determined by boiling paraxylene extraction, of 0.01 to 25 % by weight. The modified polypropylene, a process for preparing the modified polypropylene, and a modified polypropylene composition containing the modified polypropylene are capable of producing a foamed product having excellent foam properties and food hygienic qualities. The foamed product obtained from the modified polypropylene or the modified polypropylene composition is lightweight, highly rigid and excellent in chemical resistance and food hygienic qualities, and hence it can be used for food packaging containers and trays, particularly containers of noodles or ice cream and trays of fish or meat, for which polystyrene has been heretofore used.

EP 1 179 544 A1

**Description**

FIELD OF THE INVENTION

The present invention relates to modified polypropylene, a process for preparing modified polypropylene, a modified polypropylene composition containing the modified polypropylene, and a foamed product obtained from the modified polypropylene or the modified polypropylene composition.

BACKGROUND OF THE INVENTION

Since foamed products made from thermoplastic resins are generally lightweight and excellent in heat insulating properties and cushioning properties against external stress, they are widely used as heat insulating materials, cushioning materials, core materials, food containers, etc. Of these, foamed products made from polypropylene are excellent not only in chemical resistance, impact resistance and heat resistance but also in food hygienic qualities, so that use of them as trays for fresh foods has been studied.

The polypropylene, however, is a crystalline resin, and hence it has low viscosity and low melt tension when melted, so that in the foaming process of the polypropylene, there is a problem that cells are liable to collapsing. On this account, it is difficult to foam the polypropylene and to obtain low-density foamed products having excellent appearance and excellent formability.

To improve foaming properties of the polypropylene, a process for producing a foamed product wherein a blowing agent and a crosslinking assistant are added to polypropylene to crosslink the molecules has been proposed in, for example, Japanese Patent Publication No. 40420/1970. Even by the process, however, improvement of melt tension of the polypropylene is insufficient, and the unreacted crosslinking assistant remains in the polypropylene to develop strong odor. As a result, the resulting foamed product is unsuitable for food packaging.

To improve the foaming properties of the polypropylene, further, a process comprising blending polypropylene with polyethylene and foaming the blend has been proposed in, for example, Japanese Patent Publication No. 2574/1969. However, the effect of improvement in the melt tension of the polypropylene given by this process is small, and no foamed product having excellent secondary processability can be obtained.

In WO99/27007, it is described that a peroxydicarbonate can be used as a radical polymerization initiator, and the melt viscosity of modified polypropylene is not lowered but rather increased. In this publication, however, modified polypropylene resins obtained by blending one kind of a propylene homopolymer, one kind of a polypropylene block copolymer, one kind of a polypropylene random copolymer and several kinds of peroxydicarbonates in some levels are only introduced, and neither formulation to obtain resins having properties suitable for foam molding nor proposal for delicate control of the properties of the foamed product is described. Further, obtainable from the compositions described in WO99/27007 are only foamed sheets having bad surface appearance.

In such circumstances as mentioned above, the present inventor has studied and found that modified polypropylene having a specific melt flow rate, a specific melt tension and a specific gel fraction is suitable for foam molding and foamed products having excellent appearance can be obtained from the modified polypropylene. The present inventor has also found that a modified polypropylene composition comprising the modified polypropylene and non-crosslinked polypropylene or high-pressure low-density polyethylene is also suitable for foam molding and foamed products having excellent appearance can be obtained from the composition.

As a result of studies by the present inventor, it has been found that in the modified polypropylene obtained by the melt reaction of polypropylene with a peroxydicarbonate, a gel component is contained, and if the modified polypropylene containing an amount of the gel component is foamed, ununiform cells are produced. Based on the finding, the present inventor has further studied and found that modified polypropylene having almost uniform cells and improved in foaming properties can be obtained by melt kneading polypropylene and a peroxydicarbonate using an extruder under the specific conditions. Thus, the present invention has been accomplished.

As a result of further studies by the present inventor, it has been found that since modified polypropylene obtained by the reaction of polypropylene with a peroxydicarbonate compound has an increased melt viscosity, strands are frequently broken in the granulation process and thereby the granulation becomes difficult, or surface roughening takes place in the sheet production to cause bad appearance of the resulting sheet. Based on the finding, the present inventor has further studied and found that the above problems can be solved by melt kneading polypropylene, a polypropylene crosslinking type peroxide and a polypropylene decomposition type peroxide. Thus, the present invention has been accomplished.

OBJECT OF THE INVENTION

It is an object of the present invention to provide modified polypropylene capable of producing a foamed product having excellent foam properties and food hygienic qualities and favorably used for food tray or the like.

It is another object of the invention to provide a process for preparing modified polypropylene improved in foaming properties and a process for preparing modified polypropylene capable of producing a foamed product having excellent food hygienic qualities and favorably used for food tray or the like.

It is a further object of the invention to provide a process for preparing modified polypropylene capable of producing a foamed product having excellent formability, excellent appearance, uniform cells and excellent heat resistance.

It is a still further object of the invention to provide a process for preparing modified polypropylene favorably used for producing a foamed product having excellent heat resistance, high expansion ratio, excellent formability, low density and beautiful appearance.

It is a still further object of the invention to provide a modified polypropylene composition improved in foaming properties.

It is a still further object of the invention to provide a modified polypropylene composition capable of producing a foamed product having excellent food hygienic qualities and favorably used for food tray or the like.

It is a still further object of the invention to provide a modified polypropylene composition favorably used for producing a foamed product having excellent heat resistance, high expansion ratio, excellent formability, low density and beautiful appearance.

It is a still further object of the invention to provide a foamed product having excellent heat resistance, high expansion ratio, excellent formability, low density and beautiful appearance.

It is a still further object of the invention to provide a foamed product which is produced from modified polypropylene prepared by a specific process and having improved foaming properties.

It is a still further object of the invention to provide a foamed product produced from modified polypropylene prepared by a specific process, having excellent food hygienic qualities and favorably used for food tray or the like.

It is a still further object of the invention to provide a foamed product which is produced from modified polypropylene prepared by a specific process and has excellent formability, excellent appearance, uniform cells and excellent heat resistance.

It is a still further object of the invention to provide a foamed product which is produced from modified polypropylene prepared by a specific process and has excellent heat resistance, high expansion ratio, excellent formability, low density and beautiful appearance.

It is a still further object of the invention to provide a foamed product which is produced from a modified polypropylene composition having improved foaming properties.

It is a still further object of the invention to provide a foamed product which is produced from a modified polypropylene composition, has excellent food hygienic qualities and is favorably used for food tray or the like.

It is a still further object of the invention to provide a foamed product which is produced from a modified polypropylene composition and has excellent heat resistance, high expansion ratio, excellent formability, low density and beautiful appearance.

SUMMARY OF THE INVENTION

The modified polypropylene (A1) according to the invention has a melt flow rate (ASTM D1238, 230°C, load of 2.16 kg) of 0.1 to 10 g/10 min, a melt tension of 3 to 20 g and a gel fraction, as determined by boiling paraxylene extraction, of 0.01 to 25 % by weight.

The modified polypropylene (A1) of the invention is obtained by, for example, melt kneading 98.5 to 99.7 % by weight of polypropylene (B1) having a melt flow rate of 0.4 to 15 g/10 min and 0.3 to 1.5 % by weight of a peroxydicarbonate (C) at a temperature of 170 to 250°C.

In the present invention, the peroxydicarbonate (C) is preferably bis(4-t-butylcyclohexyl) peroxydicarbonate or dicetyl peroxydicarbonate.

The process for preparing modified polypropylene (A2) according to the invention comprises melt kneading polypropylene (B2) and a peroxydicarbonate (C) using an extruder at a temperature of 170 to 250°C in such a manner that the specific energy ($E_{SP}$) becomes 0.25 to 0.8 kW·hr/kg to prepare modified polypropylene (A2) having a melt flow rate (ASTM D1238, 230°C, load of 2.16 kg) of 0.1 to 10 g/10 min, a melt tension of 3 to 20 g and a gel fraction, as determined by boiling paraxylene extraction, of 0.01 to 25 % by weight.

In the present invention, the extruder is preferably a twin-screw extruder. In the screw arrangement of the twin-screw extruder, at least one kneading section is desirably provided.

In the present invention, the peroxydicarbonate (C) is preferably bis(4-t-butylcyclohexyl) peroxydicarbonate or dicetyl peroxydicarbonate.

The process for preparing modified polypropylene (A3) according to the invention comprises melt kneading polypropylene (B1), a polypropylene crosslinking type peroxide (D) and a polypropylene decomposition type peroxide (E) at a temperature of 160 to 250°C.

In the present invention, the polypropylene crosslinking type peroxide (D) is preferably a peroxydicarbonate, and the peroxydicarbonate is preferably bis(4-t-butylcyclohexyl) peroxydicarbonate or dicetyl peroxydicarbonate.

In the present invention, the polypropylene decomposition type peroxide (E) is preferably a dialkyl peroxide, and the dialkyl peroxide is preferably 2,5-dimethyl-2,5-bis(t-butylperoxy)hexane.

The process for preparing modified polypropylene (A4) according to the invention comprises melt kneading polypropylene (B1) and a polypropylene crosslinking type peroxide (D) at a temperature of 160 to 250°C and then melt kneading the resulting kneadate and a polypropylene decomposition type peroxide (E) at a temperature of 160 to 250°C.

In the present invention, the polypropylene crosslinking type peroxide (D) is preferably a peroxydicarbonate, and the peroxydicarbonate is preferably bis (4-t-butylcyclohexyl) peroxydicarbonate or dicetyl peroxydicarbonate.

In the present invention, the polypropylene decomposition type peroxide (E) is preferably a dialkyl peroxide, and the dialkyl peroxide is preferably 2,5-dimethyl-2,5-bis(t-butylperoxy)hexane.

The modified polypropylene composition (F1) according to the invention is a composition comprising:

(B3) polypropylene, and

(B3) polypropylene, and(A1) the modified polypropylene,

wherein the modified polypropylene (A1) is contained in an amount of 99 to 1 % by weight and the polypropylene (B3) is contained in an amount of 1 to 99 % by weight, the total of said components (A1) and (B3) being 100 % by weight.

The modified polypropylene composition (F2) according to the invention is a composition comprising:

(G) high-pressure low-density polyethylene, and

(A1) the modified polypropylene,

wherein the high-pressure low-density polyethylene (G) is contained in an amount of 50 to 1 % by weight and the modified polypropylene (A1) is contained in an amount of 50 to 99 % by weight, the total of said components (G) and (A1) being 100 % by weight.

The foamed product according to the invention is obtained from any one of the modified polypropylene (A1) to the modified polypropylene (A4), the modified polypropylene compositions (F1) and the modified polypropylene composition (F2).

## DETAILED DESCRIPTION OF THE INVENTION

The modified polypropylene, the process for preparing modified polypropylene, the modified polypropylene composition and the foamed product according to the invention are described in detail hereinafter.

(A1) Modified polypropylene

The modified polypropylene (A1) according to the invention has a melt flow rate (ASTM D1238, 230°C, load of 2.16 kg) of 0.1 to 10 g/10 min, preferably 0.2 to 5 g/10 min, a melt tension of 3 to 20 g, preferably 5 to 15 g, and a gel fraction, as determined by boiling paraxylene extraction, of 0.01 to 25 % by weight, preferably 0.1 to 10 % by weight, particularly preferably 0.2 to 1.0 % by weight.

The modified polypropylene (A1) has Mw/Mn, as determined by gel permeation chromatography, of preferably 5 to 10, and Mz/Mw, as determined by the same, of preferably 2.5 to 5.

Methods to measure the melt flow rate, the melt tension, the gel fraction and the Mw/Mn are described later.

The modified polypropylene (A1) of the invention is obtained by melt kneading polypropylene (B1) that is a starting polypropylene resin and a peroxydicarbonate (C).

(B1) Polypropylene

The polypropylene (B1) (starting material) used for preparing the modified polypropylene (A1) of the invention is a propylene homopolymer or a copolymer of propylene and at least one α-olefin selected from α-olefins of 2 to 20 carbon atoms other than propylene. The polypropylene (B1) is non-crosslinked or substantially non-crosslinked polypropylene.

Examples of the α-olefins of 2 to 20 carbon atoms other than propylene include ethylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. Of these, preferable is ethylene or an α-olefin of 4 to 10 carbon atoms.

These α-olefins may form random copolymers or block copolymers together with propylene. The constituent units derived from these α-olefins may be contained in the polypropylene in amounts of not more than 5 %, preferably not more than 2 %.

The melt flow rate (ASTM D1238, 230°C, load of 2.16 kg) of the polypropylene (B1) is desired to be in the range of usually 0.4 to 15 g/10 min, preferably 1 to 10 g/10 min, particularly preferably 1.5 to 8 g/10 min. The Mw/Mn, as determined by gel permeation chromatography (GPC), is in the range of preferably 4 to 8.

To the polypropylene (B1), a resin or a rubber other than the polypropylene (B1) may be optionally added in an amount not detrimental to the effects of the present invention.

Examples of the other resins and rubbers include polyethylene; poly-α-olefins, such as poly-1-butene, polyisobutene, poly-1-pentene and polymethyl-1-pentene; copolymers of two α-olefins selected from α-olefins of 2 to 20 carbon atoms, such as an ethylene/propylene copolymer having a propylene content of less than 75 % by weight, an ethylene/1-butene copolymer, and a propylene/1-butene copolymer having a propylene content of less than 75 % by weight; copolymers of two α-olefins selected from α-olefins of 2 to 20 carbon atoms and a diene monomer, such as an ethylene/propylene/5-ethylidene-2-norbornene copolymer having a propylene content of less than 75 % by weight; copolymers of one α-olefin selected from α-olefins of 2 to 20 carbon atoms and a vinyl monomer, such as an ethylene/vinyl chloride copolymer, an ethylene/vinylidene chloride copolymer, an ethylene/acrylonitrile copolymer, an ethylene/methacrylonitrile copolymer, an ethylene/vinyl acetate copolymer, an ethylene/acrylamide copolymer, an ethylene/methacrylamide copolymer, an ethylene/acrylic acid copolymer, an ethylene/methacrylic acid copolymer, an ethylene/maleic acid copolymer, an ethylene/ethyl acrylate copolymer, an ethylene/butyl acrylate copolymer, an ethylene/methyl methacrylate copolymer, an ethylene/maleic anhydride copolymer, an ethylene/acrylic acid metal salt copolymer, an ethylene/methacrylic acid metal salt copolymer, an ethylene/styrene copolymer, an ethylene/methylstyrene copolymer and an ethylene/divinylbenzene copolymer; polydiene copolymers, such as polyisobutene, polybutadiene and polyisoprene; vinyl monomer/diene monomer random copolymers, such as a styrene/butadiene random copolymer; vinyl monomer/diene monomer/vinyl monomer block copolymers, such as a styrene/butadiene/styrene block copolymer; hydrogenated (vinyl monomer/diene monomer random copolymers), such as a hydrogenated (styrene/butadiene random copolymer) ; hydrogenated (vinyl monomer/diene monomer/vinyl monomer block copolymers), such as a hydrogenated (styrene/butadiene/styrene block copolymer); vinyl monomer/diene monomer/vinyl monomer graft copolymers, such as an acrylonitrile/butadiene/styrene copolymer and a methyl methacrylate/butadiene/styrene copolymer; vinyl polymers, such as polyvinyl chloride, polyvinylidene chloride, polyacrylonitrile, polyvinyl acetate, polyethyl acrylate, polybutyl acrylate and methyl polymethacrylate; and vinyl copolymers, such as a vinyl chloride/acrylonitrile copolymer, a vinyl chloride/vinyl acetate copolymer, an acrylonitrile/styrene copolymer and a methyl methacrylate/styrene copolymer.

The amount of the other resin or rubber added to the polypropylene (B1) varies depending upon the type of the resin or rubber, and any amount not detrimental to the effects of the invention is available, but usually, the amount is not more than about 25 % by weight.

To the polypropylene (B1), further stabilizers, such as antioxidant, ultraviolet light absorber, metallic soap and hydrochloric acid absorbent, and additives, such as nucleating agent, lubricant, plasticizer, filler, reinforcing agent, pigment, dye, flame retardant and antistatic agent, may be optionally added in amounts not detrimental to the effects of the present invention.

(C) Peroxydicarbonate

The peroxydicarbonate (C) for use in the invention is a compound represented by the following formula:

$$R^1\text{-OC(O)OOC(O)O-}R^2$$

wherein $R^1$ and $R^2$ may be the same or different and are each $CH_3$, $2\text{-i-}C_3H_7O\text{-}C_6H_4$, $C_2H_5CH(CH_3)$, $4\text{-}CH_3\text{-}C_6H_4$, $Cl_3CC(CH_3)_2$, $C_7H_{15}$, $c\text{-}C_6H_{11}CH_2$, $3\text{-t-}C_4H_9\text{-}C_6H_5$, $Cl_3Si(CH_2)_3$, $C_6H_5$, $CH_3CH(OCH_3)CH_2CH_2$, $C_6H_5OCH_2CH_2$, $C_6H_5CH_2$, $z\text{-}C_8H_{17}CH=CH\,(CH_2)_8$, $2\text{-}CH_3\text{-}C_6H_4$, $(CH_3)_2CHCH_2CH\,(CH_3)$, $3,4\text{-di-}CH_3\text{-}C_6H_3$, $Cl_3C$, $CH_3CH(Cl)$, $ClCH_2$, $(C_2H_5OC(O))_2CH\,(CH_3)$, $3,5\text{-di-}CH_3\text{-}C_6H_3$, $C_8H_{17}$, $C_2H_5$, $C_{18}H_{37}$, $2\text{-oxo-}1,3\text{-dioxane-}4\text{-}CH_2$, $C_2H_5CH(Cl)CH_2$, $4\text{-}CH_3O\text{-}C_6H_4$, $i\text{-}C_4H_9$, $CH_3SO_2CH_2CH_2$, $C_{12}H_{25}$, $C_6H_5CH(Cl)CH_2$, $H_2C=CHCH_2$, $2\text{-Clc-}C_6H_{10}$, $H_2C=C(CH_3)CH_2$, $c\text{-}C_6H_{11}$, $ClCH_2CH_2$, $4\text{-}(C_6H_5\text{-N=N})\text{-}C_6H_4CH_2$, stearyl, 1-naphthyl, $4\text{-t-}C_4H_9\text{-}C_6H_{10}$, $2,4,5\text{-tri-Cl-}C_6H_2$, $C_{14}H_{29}$, 9-fluorenyl, $4\text{-NO}_2\text{-}C_6H_4CH_2$, $2\text{-i-}C_3H_7\text{-}C_6H_4$, $CH_3OCH_2CH_2$, $H_2C=C(CH_3)$, $3\text{-}CH_3\text{-}C_6H_4$, $BrCH_2CH_2$, $3\text{-}CH_3\text{-}5\text{-i-}C_3H_7\text{-}C_6H_3$, $Br_3CCH_2$, $C_2H_5OCH_2CH_2$, $H_2C=CH$, $i\text{-}C_3H_7$, $2\text{-}C_2H_5CH(CH_3)\text{-}C_6H_4$, $Cl_3CCH_2$, $C_5H_{11}$, $C\text{-}C_{12}H_{23}$, $4\text{-t-}C_4H_9\text{-}C_6H_4$, $C_6H_{13}$, $C_3H_7$, $C_6H_{13}CH(CH_3)$, $CH_3OC(CH_3)_2CH_2CH_2$, $C_3H_7OCH_2CH_2$, $CH_3OCH_2CH(CH_3)$, $2\text{-i-}C_3H_7\text{-}5\text{-}CH_3\text{-c-}C_6H_9$, $C_4H_9OCH_2CH_2$, $t\text{-}C_4H_9$ and $(CH_3)_3CCH_2$. In the above formulas, i means iso, t means tertiary, z means cis, and c means cyclic.

Of the above compounds, preferable are bis(4-t-butylcyclohexyl) peroxydicarbonate, dicetyl peroxydicarbonate, dimyristyl peroxydicarbonate, diisopropyl peroxydicarbonate, di-n-butyl peroxydicarbonate and bis(2-ethylhexyl) peroxydicarbonate.

Of these, particularly preferable are bis(4-t-butylcyclohexyl) peroxydicarbonate and dicetyl peroxydicarbonate because of excellent crosslinking effect.

The peroxydicarbonate (C) is added in an amount of 0.1 to 1.5 parts by weight, preferably 0.3 to 1.5 parts by weight, particularly preferably 0.5 to 1.0 part by weight, based on 100 parts by weight of the polypropylene (B1).

When the peroxydicarbonate (C) is added in the above amount, satisfactory modifying effects are obtained, and problems such as deterioration of foaming properties due to production of excess gel component, deterioration of food hygienic qualities of the modified polypropylene (A1) by the decomposition product of peroxide, and development of odor are not brought about.

The modified polypropylene (A1) of the invention is obtained by melt kneading the polypropylene (B1) and the peroxydicarbonate (C), and in this melt kneading, a vinyl monomer may be present when needed.

Examples of the vinyl monomers that is used in the invention when needed include vinyl chloride, vinylidene chloride, styrene, acrylonitrile, methacrylonitrile, acrylamide, methacrylamide, vinyl acetate, acrylic acid, methacrylic acid, maleic acid, maleic anhydride, acrylic acid metal salt, methacrylic acid metal salt, acrylic esters, such as methyl acrylate, ethyl acrylate, butyl acrylate, 2-ethylhexyl acrylate, stearyl acrylate and glycyl acrylate, and methacrylic esters, such as methyl methacrylate, ethyl methacrylate, butyl methacrylate, 2-ethylhexyl methacrylate, stearyl methacrylate and glycyl methacrylate.

Process for preparing modified polypropylene (A1)

To prepare the modified polypropylene (A1) of the invention, the polypropylene (B1), the peroxydicarbonate (C) and other additives optionally used are first mixed by a ribbon blender, a tumbling blender, a Henschel mixer or the like.

Then, the mixture of the polypropylene (B1), the peroxydicarbonate (C) and other additives optionally used is melt kneaded to obtain weakly crosslinked modified polypropylene (A1).

Examples of the melt kneading devices adoptable include kneading machines, such as co-kneader, Banbury mixer, Brabender, single-screw extruder and twin-screw extruder; horizontal stirrers, such as twin-screw surface replacement machine and twin-screw multi-disc device; and vertical stirrers, such as double helical ribbon stirrer.

Of these, the twin-screw extruder is particularly preferable because sufficient kneading is feasible and the productivity is excellent. In order to homogeneously and sufficiently mix the components, the melt kneading may be carried out plural times.

The heating temperature for the melt kneading is in the range of 170 to 250°C, preferably 180 to 220°C. When the melt kneading is carried out in this temperature range, the polypropylene (B1) is sufficiently melted and the peroxydicarbonate (C) is completely decomposed. Hence, the resulting modified polypropylene (A1) is not further changed in the properties in the molding process. The melt kneading time is in the range of usually 10 seconds to 5 minutes, preferably 30 seconds to 60 seconds.

In the present invention, the modified polypropylene (A1) is preferably one obtained by melt kneading 98.5 to 99.7 % by weight of the polypropylene (B1) having a melt flow rate of 0.4 to 15 g/10 min and 0.3 to 1.5 % by weight of the peroxydicarbonate (C) at a temperature of 170 to 250°C.

Process for preparing modified polypropylene (A2)

In the process for preparing modified polypropylene (A2) according to the invention, polypropylene (B2) and the peroxydicarbonate (C) are melt kneaded using an extruder under the specific conditions to prepare modified polypropylene (A2) having specific properties.

(B2) Polypropylene

The polypropylene (B2) (starting material) for use in the invention is a propylene homopolymer or a copolymer of propylene and at least one $\alpha$-olefin selected from $\alpha$-olefins of 2 to 20 carbon atoms other than propylene. The polypropylene (B2) is non-crosslinked or substantially non-crosslinked polypropylene.

Examples of the $\alpha$-olefins of 2 to 20 carbon atoms other than propylene include the same $\alpha$-olefins as previously described. Of these, preferable is ethylene or an $\alpha$-olefin of 4 to 10 carbon atoms.

These $\alpha$-olefins may form random copolymers or block copolymers together with propylene. The constituent units derived from these $\alpha$-olefins may be contained in the polypropylene in amounts of not more than 5 %, preferably not more than 2 %.

The melt flow rate (ASTM D1238, 230°C, load of 2.16 kg) of the polypropylene (B2) is desired to be in the range of usually 0.3 to 30 g/10 min, preferably 0.4 to 20 g/10 min, particularly preferably 1 to 10 g/10 min. The Mw/Mn, as determined by gel permeation chromatography (GPC), is in the range of preferably 4 to 8.

To the polypropylene (B2), a resin or a rubber other than the polypropylene (B2) may be optionally added in an amount not detrimental to the effects of the present invention.

Examples of the other resins and rubbers include the same resins and rubbers other than the polypropylene (B1) as previously described.

The amount of the other resin or rubber added to the polypropylene (B2) varies depending upon the type of the resin or rubber, and any amount not detrimental to the effects of the invention is available, but usually, the amount is not more than about 25 % by weight.

To the polypropylene (B2), further stabilizers, such as antioxidant, ultraviolet light absorber, metallic soap and hydrochloric acid absorbent, and additives, such as nucleating agent, lubricant, plasticizer, filler, reinforcing agent, pigment, dye, flame retardant and antistatic agent, may be optionally added in amounts not detrimental to the effects of the present invention.

(C) Peroxydicarbonate

Examples of the peroxydicarbonates (C) include the same compounds as previously described. Of the compounds, preferable are bis(4-t-butylcyclohexyl) peroxydicarbonate, dicetyl peroxydicarbonate, dimyristyl peroxydicarbonate, diisopropyl peroxydicarbonate, di-n-butyl peroxydicarbonate and bis(2-ethylhexyl) peroxydicarbonate.

Of these, particularly preferable are bis(4-t-butylcyclohexyl) peroxydicarbonate and dicetyl peroxydicarbonate because of excellent crosslinking effect.

The peroxydicarbonate (C) is added in an amount of preferably 0.1 to 10 parts by weight, more preferably 0.5 to 5 parts by weight, based on 100 parts by weight of the polypropylene (B2).

When the peroxydicarbonate (C) is added in the above amount, satisfactory modifying effects are obtained, and problems such as deterioration of foaming properties due to production of excess gel component, deterioration of food hygienic qualities of the modified polypropylene by the decomposition product of peroxide, and development of odor are not brought about.

Preparation process

The modified polypropylene (A2) in the invention is obtained by melt kneading the polypropylene (B2) and the peroxydicarbonate (C), and in this melt kneading, a vinyl monomer may be present when needed.

Examples of the vinyl monomers that is used in the invention when needed include the same monomers as previously described.

In the process for preparing modified polypropylene (A2) according to the invention, the polypropylene (B2), the peroxydicarbonate (C) and other additives optionally used are first mixed by a ribbon blender, a tumbling blender, a Henschel mixer or the like.

Then, the mixture of the polypropylene (B2), the peroxydicarbonate (C) and other additives optionally used is melt kneaded.

As the extruder used for melt kneading, a single-screw extruder or a twin-screw extruder is adoptable. Of these, the twin-screw extruder is particularly preferable because sufficient kneading is feasible and the productivity is excellent.

The twin-screw extruder preferably used in the invention has L/D of at least 25, preferably 30 or more, and a maximum screw rotational number of 100 to 300 rpm, and the rotational directions of two screws are preferably the same as each other.

In the present invention, the melt kneading is carried out in such a manner that the specific energy ($E_{SP}$) becomes 0.25 to 0.8 kW·hr/kg, preferably 0.3 to 0.78 kW·hr/kg, particularly preferably 0.35 to 0.68 kW·hr/kg.

The term "specific energy" used herein means energy (kW·hr) required for melt kneading based on 1 kg of the resin kneaded, and the specific energy can be calculated from the following formula (1):

$$S = (P-V)/M \qquad (1)$$

wherein S is specific energy (kW·hr/kg), P is energy (kW·hr/hr) required during the melt kneading, M is an extrusion rate (kg/hr), and V is energy (kW·hr/hr) required when the extruder idles.

Control of the specific energy is made by screw arrangement.

That is to say, if all units are forward screws in the screw arrangement, the specific energy becomes smallest. The specific energy can be increased by providing reverse screw section, kneading section and barrier ring section. Also by the number of the screw rotations, the specific energy can be changed.

In the process for preparing modified polypropylene (A2) according to the invention, at least one kneading section, preferably two or more kneading sections are provided in the screw arrangement of the twin-screw extruder, whereby the polypropylene (B2), the peroxydicarbonate (C) and additives optionally added can be sufficiently kneaded.

As a result, modified polypropylene in which the gel component is not unevenly distributed can be obtained.

The heating temperature for the melt kneading is in the range of 170 to 250°C, preferably 180 to 220°C. When the melt kneading is carried out in this temperature range, the polypropylene (B2) is sufficiently melted and the peroxydicarbonate (C) is completely decomposed. Hence, the resulting modified polypropylene is not further changed in the properties in the molding process. The melt kneading time is in the range of usually 10 seconds to 5 minutes, preferably 30 seconds to 60 seconds.

The thus obtained modified polypropylene (A2) has a melt flow rate (ASTM D1238, 230°C, load of 2.16 kg) of 0.1 to 10 g/10 min, preferably 0.2 to 5 g/10 min, a melt tension of 3 to 20 g, preferably 5 to 15 g, Mw/Mn, as determined by gel permeation chromatography, of preferably 5 to 10, Mz/Mw of preferably 2.5 to 5, and a gel fraction, as determined by boiling paraxylene extraction, of 0.01 to 25 % by weight, preferably 0.1 to 10 % by weight, particularly preferably 0.2 to 1.0 % by weight.

The modified polypropylene (A2) prepared by the process of the invention has a high melt tension, a moderate MFR and a gel component sufficiently dispersed, so that this polypropylene is suitable for molding into foamed sheets.

Also by the process for preparing modified polypropylene (A2) according to the invention, the modified polypropylene (A1) can be prepared.

Process for preparing modified polypropylene (A3)

In the process for preparing modified polypropylene (A3) according to the invention, polypropylene (B1), a polypropylene crosslinking type peroxide (D) and a polypropylene decomposition type peroxide (E) are melt kneaded.

Polypropylene (B1)

Examples of the polypropylene (B1) include the same polymers as previously described with respect to the polypropylene (B1).

To the polypropylene (B1), a resin or a rubber other than the polypropylene (B1) may be optionally added in an amount not detrimental to the effects of the present invention.

Examples of the other resins and rubbers include the same resins and rubbers other than the polypropylene (B1) as previously described.

The amount of the other resin or rubber added to the polypropylene (B1) varies depending upon the type of the resin or rubber, and any amount not detrimental to the effects of the invention is available, but usually, the amount is not more than about 25 % by weight.

To the polypropylene (B1), further stabilizers, such as antioxidant, ultraviolet light absorber, metallic soap and hydrochloric acid absorbent, and additives, such as nucleating agent, lubricant, plasticizer, filler, reinforcing agent, pigment, dye, flame retardant and antistatic agent, may be optionally added in amounts not detrimental to the effects of the present invention.

(D) Polypropylene crosslinking type peroxide

The polypropylene crosslinking type peroxide (D) for use in the invention is such a peroxide that when this peroxide is melted together with the polypropylene (B1), the viscosity of the polypropylene (B1) is increased and the apparent molecular weight thereof is increased. Examples of such peroxides include the same compounds as previously described with respect to the peroxydicarbonate (C).

Of the peroxydicarbonates, preferable compounds are bis(4-t-butylcyclohexyl) peroxydicarbonate, dicetyl peroxydicarbonate, dimyristyl peroxydicarbonate, diisopropyl peroxydicarbonate, di-n-butyl peroxydicarbonate and bis (2-ethylhexyl) peroxydicarbonate.

Of these, particularly preferable are bis(4-t-butylcyclohexyl) peroxydicarbonate and dicetyl peroxydicarbonate because of excellent crosslinking effect.

These polypropylene crosslinking type peroxides (D) can be used singly or in combination of two or more kinds.

The polypropylene crosslinking type peroxide (D) is added in an amount of 0.3 to 5 parts by weight, preferably 0.5 to 3 parts by weight, based on 100 parts by weight of the polypropylene (B1).

(E) Polypropylene decomposition type peroxide

The polypropylene decomposition type peroxide (E) for use in the invention is such a peroxide that when this peroxide is melted together with the polypropylene (B1), the intrinsic viscosity of the polypropylene (B1) is lowered and the molecular weight thereof is decreased.

Examples of the polypropylene decomposition type peroxides (E) include ketone peroxides, such as methyl ethyl ketone peroxide and methyl acetoacetate peroxide; peroxy ketals, such as 1,1-bis(t-butylperoxy)-3,3,5-trimethylcyclohexane, 1,1-bis(1-butylperoxy)cyclohexane, n-butyl-4,4-bis(t-butylperoxy)valerate and 2,2-bis(t-butylperoxy)butane; hydroperoxides, such as permethane hydroperoxide, 1,1,3,3-tetramethylbutyl hydroperoxide, diisopropylbenzene hydroperoxide and cumene hydroperoxide; dialkyl peroxides, such as dicumyl peroxide, 2,5-dimethyl-2,5-di(t-butylperoxy)hexane, $\alpha,\alpha'$-bis(t-butylperoxy-m-isopropyl)benzene, t-butylcumyl peroxide, di-t-butyl peroxide and 2,5-dimethyl-2,5-di(t-butylperoxy)hexyne-3; diacyl peroxides, such as benzoyl peroxide; di(3-methyl-3-methoxybutyl) peroxydicarbonate; and peroxy esters, such as t-butyl peroxyoctate, t-butyl peroxyisobutyrate, t-butyl peroxylaurate, t-butylperoxy-3,5,5,-trimethylhexanoate, t-butyl peroxyisopropylcarbonate, 2,5-dimethyl-2,5-di(benzoylperoxy)hexane, t-butyl peroxyacetate, t-butyl peroxybenzoate and di-t-butyl peroxyisophthalate.

Of the polypropylene decomposition type peroxides (E), dialkyl peroxides are preferable. Of these, 2,5-dimethyl-2,5-di(t-butylperoxy)hexane is particularly preferable because of low decomposition temperature of the peroxide and development of less decomposition odor.

These polypropylene decomposition type peroxides (E) can be used singly or in combination of two or more kinds.

The polypropylene decomposition type peroxide (E) is added in an amount of preferably 0.001 to 0.5 part by weight, more preferably 0.005 to 0.2 part by weight, based on 100 parts by weight of the polypropylene (B1).

When the polypropylene decomposition type peroxide (E) is added in the above amount, satisfactory modifying effects on the flowability of the modified polypropylene (A3) by the polypropylene decomposition type peroxide (E) are obtained, and problems that the MFR of the modified polypropylene (A3) is too highly increased and the melt tension is lowered to deteriorate crosslinking foaming properties of the modified polypropylene (A3) are not brought about.

In the present invention, the polypropylene (B1), the polypropylene crosslinking type peroxide (D) and the polypropylene decomposition type peroxide (E) are melt kneaded, and in this melt kneading, a vinyl monomer may be present when needed.

Examples of the vinyl monomers that is used in the invention when needed include the same monomers as previously described.

Preparation process

In the present invention, the polypropylene (B1), the polypropylene crosslinking type peroxide (D), the polypropylene decomposition type peroxide (E) and other additives optionally used are first mixed by a ribbon blender, a tumbling blender, a Henschel mixer or the like.

Then, the mixture of the polypropylene (B1), the polypropylene crosslinking type peroxide (D), the polypropylene decomposition type peroxide (E) and other additives optionally used is melt kneaded to obtain modified polypropylene.

Examples of the melt kneading devices adoptable include kneading machines, such as co-kneader, Banbury mixer, Brabender, single-screw extruder and twin-screw extruder; horizontal stirrers, such as twin-screw surface replacement machine and twin-screw multi-disc device; and vertical stirrers, such as double helical ribbon stirrer.

Of these, the twin-screw extruder is particularly preferable because sufficient kneading is feasible and the productivity is excellent. In order to homogeneously and sufficiently mix the components, the melt kneading may be carried out plural times.

The heating temperature for the melt kneading is in the range of 160 to 250°C, preferably 170 to 220°C. When the melt kneading is carried out in this temperature range, the polypropylene (B1) is sufficiently melted and the polypropylene crosslinking type peroxide (D) and the polypropylene decomposition type peroxide (E) are completely decomposed. Hence, the resulting modified polypropylene (A3) is not further changed in the properties in the molding process. The melt kneading time is in the range of usually 10 seconds to 5 minutes, preferably 30 seconds to 60 seconds.

The thus obtained modified polypropylene (A3) has a melt flow rate (ASTM D1238, 230°C, load of 2.16 kg) of preferably 0.1 to 15 g/10 min, a melt tension of preferably 3 to 20 g, Mw/Mn, as determined by gel permeation chromatography, of preferably 2 to 5, and a gel fraction, as determined by boiling paraxylene extraction, of preferably 0.1 to 10 % by weight.

Also by the process for preparing modified polypropylene (A3) according the to invention, the modified polypropylene (A1) can be prepared.

Process for preparing modified polypropylene (A4)

In the process for preparing modified polypropylene (A4) according to the invention, the polypropylene (B1) and a polypropylene crosslinking type peroxide (D) are melt kneaded, and then the resulting kneadate and a polypropylene decomposition type peroxide (E) are melt kneaded.

(D) Polypropylene crosslinking type peroxide

The polypropylene crosslinking type peroxide (D) for use in the invention is such a peroxide that when this peroxide is melted together with the polypropylene (B1), the intrinsic viscosity of the polypropylene (B1) is increased and the apparent molecular weight thereof is increased. Examples of such peroxides include the same compounds as previously described with respect to the peroxydicarbonate (C).

Of the peroxydicarbonates, preferable compounds are bis(4-t-butylcyclohexyl) peroxydicarbonate, dicetyl peroxydicarbonate, dimyristyl peroxydicarbonate, diisopropyl peroxydicarbonate, di-n-butyl peroxydicarbonate and bis (2-ethylhexyl) peroxydicarbonate.

Of these, particularly preferable are bis(4-t-butylcyclohexyl) peroxydicarbonate and dicetyl peroxydicarbonate because of excellent crosslinking effect.

These polypropylene crosslinking type peroxides (D) can be used singly or in combination of two or more kinds.

The polypropylene crosslinking type peroxide (D) is added in an amount of preferably 0.3 to 5 parts by weight, more preferably 0.5 to 3 parts by weight, based on 100 parts by weight of the polypropylene (B1).

(E) Polypropylene decomposition type peroxide

Examples of the polypropylene decomposition type peroxides (E) for use in the invention include the same compounds as previously described.

Of the polypropylene decomposition type peroxides (E), dialkyl peroxides are preferable. Of these, 2,5-dimethyl-2,5-di(t-butylperoxy)hexane is particularly preferable because of low decomposition temperature of the peroxide and development of less decomposition odor.

These polypropylene decomposition type peroxides (E) can be used singly or in combination of two or more kinds.

The polypropylene decomposition type peroxide (E) is added in an amount of preferably 0.001 to 0.5 part by weight, more preferably 0.005 to 0.2 part by weight, based on 100 parts by weight of the polypropylene (B1).

When the polypropylene decomposition type peroxide (E) is added in the above amount, satisfactory modifying effects on the flowability of the modified polypropylene (A4) by the polypropylene decomposition type peroxide (E) are obtained, and problems that the MFR of the modified polypropylene (A4) is too highly increased and the melt tension is lowered to deteriorate crosslinking foaming properties of the modified polypropylene (A4) are not brought about.

In the present invention, the polypropylene (B1) and the polypropylene crosslinking type peroxide (D) are melt kneaded, and then the resulting kneadate and the polypropylene decomposition type peroxide (E) are melt kneaded. In this melt kneading, a vinyl monomer may be present when needed.

Examples of the vinyl monomers that is used in the invention when needed include the same monomers as previously described.

Preparation process

In the present invention, the polypropylene (B1), the polypropylene crosslinking type peroxide (D) and other additives optionally used are first mixed by a ribbon blender, a tumbling blender, a Henschel mixer or the like.

Then, the mixture of the polypropylene (B1), the polypropylene crosslinking type peroxide (D) and other additives optionally used is melt kneaded to obtain a kneadate (partially crosslinked polypropylene). This melt kneading is carried out in the absence of the polypropylene decomposition type peroxide (E).

Examples of the melt kneading devices adoptable include kneading machines, such as co-kneader, Banbury mixer, Brabender, single-screw extruder and twin-screw extruder; horizontal stirrers, such as twin-screw surface replacement machine and twin-screw multi-disc device; and vertical stirrers, such as double helical ribbon stirrer.

Of these, the twin-screw extruder is particularly preferable because sufficient kneading is feasible and the productivity is excellent. In order to homogeneously and sufficiently mix the components, the melt kneading may be carried out plural times.

The heating temperature for the melt kneading is in the range of 160 to 250°C, preferably 170 to 220°C. When the melt kneading is carried out in this temperature range, the polypropylene (B1) is sufficiently melted and the crosslinking agent is completely decomposed. The melt kneading time is in the range of usually 10 seconds to 5 minutes, preferably 30 seconds to 60 seconds.

In the present invention, the resulting kneadate and the polypropylene decomposition type peroxide (E) are then melt kneaded. By this treatment, modified polypropylene (A4) having proper melt properties and capable of being taken off as a strand can be obtained.

Although melt kneading of the kneadate and the polypropylene decomposition type peroxide (E) can be carried out by any method, it is preferable to melt knead the polypropylene (B1) and the polypropylene crosslinking type peroxide (D) and then add the polypropylene decomposition type peroxide (E) to the kneadate in a state where the kneadate is still molten to perform melt kneading.

More specifically, using a twin-screw extruder equipped with at least two kneading sections, a mixture of the polypropylene (B1) and the polypropylene crosslinking type peroxide (D) is fed through a hopper and melt kneaded. On the other hand, the polypropylene decomposition type peroxide (E) is fed through a side feed opening provided at the intermediate position (between one kneading section and the other kneading section) of the extruder to thereby add the peroxide (E) to the molten kneadate of the polypropylene (B1) and the polypropylene crosslinking type peroxide (D), followed by further melt kneading.

The side feed of the polypropylene decomposition type peroxide (E) can be usually carried out by an autofeeder. The polypropylene decomposition type peroxide (E) may be in the form of a solid powder, a solution obtained by dissolving the peroxide in a solvent, or an emulsion obtained by dispersing the peroxide in water.

The heating temperature for melt kneading the molten kneadate of the polypropylene (B1) and the polypropylene crosslinking type peroxide (D) with the polypropylene decomposition peroxide (E) is in the range of 160 to 250°C, preferably 170 to 220°C. When the melt kneading is carried out in this temperature range, the kneadate is sufficiently melted and the polypropylene decomposition type peroxide (E) is completely decomposed. Hence, the resulting composition is not further changed in the properties in the molding process. The melt kneading time is in the range of usually 10 seconds to 5 minutes, preferably 30 seconds to 60 seconds.

The thus obtained modified polypropylene (A4) has a melt flow rate (ASTM D1238, 230°C, load of 2.16 kg) of preferably 0.1 to 15 g/10 min, a melt tension of preferably 3 to 20 g, Mw/Mn, as determined by gel permeation chromatography, of preferably 2 to 5, and a gel fraction, as determined by boiling paraxylene extraction, of preferably 0.1 to 10 % by weight.

Also by the process for preparing modified polypropylene (A4) according the to invention, the modified polypropylene (A1) can be prepared.

Modified polypropylene composition (F1)

The modified polypropylene composition (F1) according to the invention is obtained from the following polypropylene (B3) and the aforesaid modified polypropylene (A1).

(A1) Modified polypropylene

Although the modified polypropylene (A1) preferably used in the invention is one obtained by the aforesaid process, the modified polypropylene (A1) may be one obtained by melt kneading the following polypropylene (B3) and the aforesaid peroxydicarbonate (C) through the above-mentioned method.

In the melt kneading, the peroxydicarbonate (C) is added in an amount of preferably 0.1 to 10 parts by weight, more preferably 0.5 to 5 parts by weight, based on 100 parts by weight of the polypropylene (B3).

When the peroxydicarbonate (C) is added in the above amount, satisfactory modifying effects are obtained, and problems such as deterioration of foaming properties due to production of excess gel component, deterioration of food hygienic qualities of the modified polypropylene (A1) by the decomposition product of peroxide, and development of odor are not brought about.

In the melt kneading of the polypropylene (B3) and the peroxydicarbonate (C), the aforesaid vinyl monomer may be present when needed.

(B3) Polypropylene

The polypropylene (B3) (starting material) for use in the invention is a propylene homopolymer or a copolymer of propylene and at least one α-olefin selected from α-olefins of 2 to 20 carbon atoms other than propylene. The polypropylene (B1) is non-crosslinked or substantially non-crosslinked polypropylene.

Examples of the α-olefins of 2 to 20 carbon atoms other than propylene include the same α-olefins as previously described. Of these, preferable is ethylene or an α-olefin of 4 to 10 carbon atoms.

These α-olefins may form random copolymers or block copolymers together with propylene. The constituent units derived from these α-olefins may be contained in the polypropylene in amounts of not more than 5 %, preferably not more than 2 %.

The melt flow rate (ASTM D1238, 230°C, load of 2.16 kg) of the polypropylene (B3) is in the range of usually 1 to 20 g/10 min, preferably 1.5 to 10 g/10 min, and the Mw/Mn, as determined by gel permeation chromatography (GPC), is in the range of preferably 4 to 8.

To the polypropylene (B3), a resin or a rubber other than the polypropylene (B3) may be optionally added in an amount not detrimental to the effects of the present invention.

Examples of the other resins and rubbers include the same resins and rubbers other than the polypropylene (B1) as previously described.

The amount of the other resin or rubber added to the polypropylene (B3) varies depending upon the type of the resin or rubber, and any amount not detrimental to the effects of the invention is available, but usually, the amount is not more than about 25 % by weight.

To the polypropylene (B3), further stabilizers, such as antioxidant, ultraviolet light absorber, metallic soap and hydrochloric acid absorbent, and additives, such as nucleating agent, lubricant, plasticizer, filler, reinforcing agent, pigment, dye, flame retardant and antistatic agent, may be optionally added in amounts not detrimental to the effects of the present invention.

Composition

The modified polypropylene composition (F1) of the invention comprises the polypropylene (B3) and the modified polypropylene (A1).

In the modified polypropylene composition (F1), the blending proportions of the polypropylene (B3) and the modified polypropylene (A1) are as follows. The composition (F1) contains the polypropylene (B3) in the range of 99 to 1 % by weight, preferably, 50 to 1 % by weight, particularly preferably 20 to 5 % by weight, and the modified polypropylene (A1) in the range of 1 to 99 % by weight, preferably, 50 to 99 % by weight, particularly preferably, 80 to 95 % by weight. The total of the components (B3) and (A1) is 100 % by weight.

The modified polypropylene (A1) generally tends to have a low melt flow rate and a high melt tension, so that it is preferable to use, as the polypropylene (B3), non-crosslinked polypropylene usually having a higher MFR and a lower melt tension than those of the modified polypropylene (A1), though it depends upon the properties of the modified polypropylene (A1) to be blended.

The modified polypropylene composition of the invention can be prepared by mixing the polypropylene (B3) with the modified polypropylene (A1) by, for example, a ribbon blender, a tumbling blender or a Henschel mixer.

The modified polypropylene composition of the invention can be prepared also by melt kneading the polypropylene (B3) and the modified polypropylene (A1) by the use of a melt kneading device. Examples of the melt kneading devices include kneading machines, such as co-kneader, Banbury mixer, Brabender, single-screw extruder and twin-screw extruder; horizontal stirrers, such as twin-screw surface replacement machine and twin-screw multi-disc device; and vertical stirrers, such as double helical ribbon stirrer.

Because of its high melt tension and moderate MFR, the modified polypropylene composition of the invention is favorable as a starting material to produce a foamed product, particularly a foamed sheet. Further, from the modified polypropylene composition of the invention, a foamed product having excellent appearance can be produced.

Modified polypropylene composition (F2)

The modified polypropylene composition (F2) according to the invention is obtained from the following high-pressure low-density polyethylene (G) and the aforesaid modified polypropylene (A1).

(G) High-pressure low-density polyethylene

The high-pressure low-density polyethylene (G) for use in the invention is a polyethylene produced by a high pressure method having a large number of branches including long-chain branchs, which is prepared by radical polymerization at a pressure of 100 kg/cm$^2$ in the presence of a peroxide, namely, so-called high-pressure radical polymerization.

The high-pressure low-density polyethylene (G) has a melt flow rate (MFR), as measured at 190°C under a load of 2.16 kg in accordance with ASTM D1238, of 0.01 to 100 g/10 min, preferably 0.01 to 10 g/10 min, and a density of 0.910 to 0.930 g/cm$^3$.

The density is determined in the following manner. A strand obtained in the MFR measurement at 190°C under a load of 2.16 kg is heat treated at 120°C for 1 hour and then slowly cooled to room temperature over a period of 1 hour, followed by measuring the density by a density gradient tube.

The high-pressure low-density polyethylene (G) has a swell ratio of preferably not less than 1.3. The swell ratio indicates degree of long chains and is a ratio (Ds/D) of a strand diameter (Ds) to a nozzle inner diameter (D), said strand being extruded from a nozzle having an inner diameter (D) of 2.0 mm and a length of 15 mm using a capillary flow property tester under the conditions of a temperature of 190°C and an extrusion rate of 10 mm/min.

The high-pressure low-density polyethylene (G) may be a copolymer with a polymerizable monomer such as another α-olefin, vinyl acetate or an acrylic ester, within limits not detrimental to the objects of the invention.

Composition

The modified polypropylene composition (F2) of the invention comprises the high-pressure low-density polyetnylene (G) and the modified polypropylene (A1).

The blending proportions of the high-pressure low-density polyethylene (G) and the modified polypropylene (A1) in the modified polypropylene composition (F2) are not specifically limited. However, in order to obtain a composition of excellent foaming properties that is an object of the invention, the composition (F2) contains the high-pressure low-density polyethylene (G) in the range of preferably 50 to 1 % by weight, particularly preferably 20 to 5 % by weight, and the modified polypropylene (A1) in the range of preferably 50 to 99 % by weight, particularly preferably 80 to 95 % by weight.

It is preferable to use, as the high-pressure low-density polyethylene (G), high-pressure low-density polyethylene having a lower MFR than that of the modified polypropylene (A1), though it depends upon the properties of the modified polypropylene (A1) to be blended.

By the use of the high-pressure low-density polyethylene (G), melt properties of the modified polypropylene composition (F2), moldability thereof into a foamed sheet and appearance of a foamed sheet, etc. are improved.

The modified polypropylene composition (F2) of the invention can be prepared by mixing the high-pressure low-density polyethylene (G) with the modified polypropylene (A1) by, for example, a ribbon blender, a tumbling blender or a Henschel mixer.

The modified polypropylene composition (F2) of the invention can be prepared also by melt kneading the high-pressure low-density polyethylene (G) and the modified polypropylene (A1) by the use of a melt kneading device. Examples of the melt kneading devices include kneading machines, such as co-kneader, Banbury mixer, Brabender, single-screw extruder and twin-screw extruder; horizontal stirrers, such as twin-screw surface replacement machine and twin-screw multi-disc device; and vertical stirrers, such as double helical ribbon stirrer.

In the above mixing or melt kneading, a resin or a rubber previously exemplified as the resin or the rubber which may be added to the modified polypropylene (A1) may be added in an amount not detrimental to the effects of the present invention, for example, in an amount of not more than 25 % by weight based on the total of the high-pressure low-density polyethylene (G) and the modified polypropylene (A1). In the mixing or melt kneading, further, additives previously exemplified as the additives which may be added to the modified polypropylene (A1) may be added in amounts not detrimental to the effects of the present invention.

Foamed product

The foamed product according to the invention is obtained from any one of the modified polypropylene (A1), the modified polypropylenes (A2), (A3) and (A4) obtained by the aforesaid processes for preparing modified polypropylene, and the modified polypropylene compositions (F1) and (F2).

A process for producing a foamed product using, as one example, the modified polypropylene (A1) is described below, but also from any of the modified polypropylenes (A2), (A3) and (A4) obtained by the aforesaid processes for preparing modified polypropylene, and the modified polypropylene compositions (F1) and (F2), a foamed product can be produced in a similar way.

For producing a foamed product from the modified polypropylene (A1), the following two processes can be given as main examples.

(1) The modified polypropylene (A1) prepared by the above process, a decomposable blowing agent, and if desired, other additives are melted by heating to perform foam molding.

(2) Into the modified polypropylene (A1) in a molten state, a volatile blowing agent is injected, followed by extrusion molding using an extruder, to obtain a foamed product.

The decomposable blowing agent used in the process (1) is a compound which is decomposed to generate a gas such as carbonic acid gas or nitrogen gas, and may be an inorganic blowing agent or an organic blowing agent. In the use of this blowing agent, an organic acid to promote generation of a gas may be used in combination.

Examples of the decomposable blowing agents include the following compounds.

(a) Inorganic blowing agents:

sodium bicarbonate, sodium carbonate, ammonium bicarbonate, ammonium carbonate, ammonium nitrite, citric acid and sodium citrate;

(2) Organic blowing agents:

N-nitroso compounds, such as N,N'-dinitrosoterephthalamide and N,N'-dinitrosopentamethylenetetramine; azo compounds, such as azodicarbonamide, azobisisobutyronitrile, azocyclohexylnitrile, azodiaminobenzene and barium azodicarboxylate; sulfonyl hydrazide compounds, such as benzenesulfonyl hydrazide, toluenesulfonyl hydrazide, p,p'-oxybis(benzenesulfonylhydrazide) and diphenylsulfone-3,3'-disulfonyl hydrazide; and azide compounds, such as calcium azide, 4,4'-diphenyldisulfonyl azide and p-toluenesulfonyl azide.

Of the above compounds, carbonates or hydrogencarbonates such as sodium hydrogenbicarbonate are preferable.

These decomposable blowing agents can be used singly or in combination of two or more kinds.

Although the addition amount (kneading amount) of the decomposable blowing agent is selected according to the type of the blowing agent and the desired expansion ratio, the amount is preferably in the range of 0.5 to 100 parts by weight based on 100 parts by weight of the modified polypropylene (A1).

To control the cell diameter of the foamed product to a proper size, a foam nucleating agent such as an organic carboxylic acid (e.g., citric acid) or talc may be used in combination.

The foam nucleating agent optionally used is added in an amount of usually 0.01 to 2 parts by weight, preferably 0.01 to 1 part by weight, based on 100 parts by weight of the modified polypropylene (A1).

In the above process (1), the modified polypropylene (A1) and the decomposable blowing agent are simultaneously fed to the melt extruder and melt kneaded at an appropriate temperature to thermally decompose the blowing agent and thereby generate a gas. Then, the molten modified polypropylene containing the gas is discharged from a die to obtain a foamed product. The melt kneading temperature and the melt kneading time in this process are appropriately selected according to the blowing agent and the kneading conditions used, and usually, the melt kneading temperature is in the range of 170 to 300°C and the melt kneading time is in the range of 1 to 60 minutes.

In the above process (2), a volatile blowing agent can be used as the blowing agent.

Examples of preferred volatile blowing agents include aliphatic hydrocarbons, such as propane, butane, pentane, hexane and heptane; alicyclic hydrocarbons, such as cyclobutane, cyclopentane and cyclohexane; halogenated hydrocarbons, such as chlorodifluoromethane, difluoromethane, trifluoromethane, trichlorofluoromethane, dichloromethane, dichlorofluoromethane, dichlorodifluoromethane, trichlorofluoromehane, chloromethane, chloroethane, dichlorotrifluoroethane, dichlorofluoroethane, chlorodifluoroethane, dichloropentafluoroethane, tetrafluoroethane, difluoroethane, pentafluoroethane, trifluoroethane, dichlorotetrafluoroethane, trichlorotrifluoroethane, tetrachlorodifluoroethane, chloropentafluoroethane and perfluorocyclobutane; inorganic gases, such as carbon dioxide, nitrogen and air; and water. These volatile blowing agents can be used singly or in combination of two or more kinds.

Although the addition amount (kneading amount) of the volatile blowing agent in the process (2) varies depending upon the type of the blowing agent and the desired expansion ratio, the amount is preferably in the range of 0.5 to 100 parts by weight based on 100 parts by weight of the modified polypropylene (A1).

In the process (2), the modified polypropylene (A1) is melted in an extruder, then the volatile blowing agent is injected into the extruder and kneaded with the molten modified polypropylene (A1) with keeping the extruder at a high pressure, and a kneadate of the modified polypropylene (A1) and the volatile blowing agent having been sufficiently kneaded is extruded from a die, whereby a foamed product can be produced. The melt kneading temperature and the melt kneading time in this process are appropriately selected according to the blowing agent and the kneading conditions used, and usually, the melt kneading temperature is in the range of 130 to 300°C and the melt kneading time is in the range of 1 to 120 minutes.

In any of the process (1) and the process (2), a foamed product can be produced by melting the starting material in an extruder and discharging the molten material containing foamed cells from a T-die or a tubular die to mold it into preferably a sheet. When the molten material is discharged from a tubular die, the resulting tubular sheet is usually cut to give one or plural sheets, and then the one or plural sheets are flattened and taken off.

The density of the foamed product of the invention is in the range of preferably 0.09 to 0.6 g/cm$^3$, particularly preferably 0.15 to 0.3 g/cm$^3$, because the foamed product having such a density is excellent in the lightweight properties, heat insulating properties, cushioning properties against external stress or compression strength. Therefore, the expansion ratio of the modified polypropylene (A1) is in the range of preferably 1.3 to 10 times, particularly preferably 1.6 to 6 times.

The closed cell ratio of the foamed product of the invention is in the range of preferably not less than 50 %, more preferably not less than 70 %, because the foamed product having such a closed cell ratio is excellent in the heat resistance, cushioning properties against external force and compression strength.

By the process for preparing a foamed product according to the invention, foamed products of various shapes can be produced. Examples of the shapes include plate shape such as sheet or board shape, hollow shape such as tubular or bag shape, pillar-like shape such as cylindrical, elliptic cylindrical, prismatic or strand shape, and particle shape.

The modified polypropylenes (A1) to (A4) have a high melt tension and a moderate MFR, so that they are particularly suitable for molding into foamed sheets.

The foamed sheets produced from the modified polypropylenes (A1) to (A4), and the modified polypropylene compositions (F1) and (F2) have excellent formability, and from the foamed sheets, a great number of trays or the like can be produced by heat pressure forming or vacuum forming.

The foamed product of the invention is lightweight, highly rigid and excellent in chemical resistance and food hygienic qualities, so that it can be used for food packaging containers and trays, particularly containers of noodles or ice cream and trays of fish or meat, for which polystyrene has been heretofore used.

EXAMPLE

The present invention is further described with reference to the following examples, but it should be construed that the invention is in no way limited to those examples.

The melt flow rate (MFR) is a value measured at 230°C under a load of 2.16 kg in accordance with the method of ASTM D1238.

The melt tension is a value of a take-up load of a pulley equipped with a load cell, that is measured by a melt tension measuring device (manufactured by Toyo Seiki Seisakusho K.K.) under the conditions of an orifice having L of 8.00 mm and D of 2.095 mm, a preset temperature of 230°C, a piston fall rate of 30 mm/min and a take-up rate of 4 mm/min.

Mw, Mn and Mz are values measured by the use of GPC (gel permeation chromatography). For example, a machine of 150C model manufactured by Waters Co. equipped with a column PlmixedB of Polymer Laboratories Co. is used, the measuring temperature is 135°C, o-dichlorobenzene is used as a solvent, a sample having a polymer concentration of 0.15 % by weight is fed in an amount of 400 µl, and standard polystyrene is used, whereby a calibration curve is formed. From the calibration curve, Mw, Mn and Mz are determined.

The gel fraction is determined in the following manner. A sample of about 2 g is placed in a wire mesh of #400 mesh and extracted for 6 hours under boiling paraxylene reflux to measure a weight of the residue in the wire mesh. Using the measured weight, the gel fraction is calculated from the following formula.

$$\text{Gel fraction (\%)} =$$

$$(\text{Weight of residue (g)/Charge weight (g)}) \times 100$$

In the following examples, the foamed sheets obtained were evaluated on the expansion ratio, appearance, shape of cell, formability (vacuum formability) and uniformity of cells in the following manner.

Sheet appearance

The sheet appearance was visually observed and evaluated based on the following criteria.

A: Neither unfoamed part, unevenness nor corrugation is observed.

B: An unfoamed part, unevenness and corrugation are observed.

Expansion ratio (M)

An apparent density (D) was calculated from the weight and the volume determined by the submerging method. Using the apparent density (D) and a true specific gravity (0.90), the expansion ratio was calculated from the formula M = 0.90/D.

Shape of cell

SEM observation of a section of the foamed sheet was made to observe the cells. A cell present independently from the adjacent cell was evaluated as "closed", and a cell connected to the adjacent cell was evaluated as "open".

Formability

Using a mold capable of vacuum forming to produce 3 cups having diameter of 50 mm and depths of 30 mm, 40 mm and 50 mm at the same time, a sheet was heated at 160°C for 2 minutes and then subjected to vacuum forming. The shapes of the resulting cups were evaluated by the following 2 ranks.

A: good
B: bad

The appearance of the resulting cups was evaluated by the following 5 ranks.

A: good
B: slightly good
C: average
D: slightly bad
E: bad

Uniformity of cells

From the center of a foamed product, a sheet having a thickness of 500 μm was cut out in the width direction. Uniformity of the cells and uniformity of wall thicknesses of the cells in the sheet were observed and evaluated by the following 5 ranks.

A: excellent
B: good
C: average
D: slightly bad
E: bad

Example 1

100 Parts by weight of a propylene homopolymer (trade name: J104, available from Grand Polymer Co., Ltd., MFR: 8.0 g/10 min, sometimes referred to as "polypropylene (a)" hereinafter) and 1.0 part by weight of bis(4-t-butylcyclohexyl) peroxydicarbonate (trade name: Perkadox 16, available from KAYAKU AKZO K.K.) as a peroxide were melt kneaded by a twin-screw extruder of the same rotational direction perfect engagement type (KZW25-30MG, manufactured by Technovel K.K., screw diameter: 31 mm, L/D = 30) under the conditions of a resin temperature of 190°C and a screw rotational speed of 150 rpm (mean residence time: 30 seconds), and the kneadate was melt extruded to obtain pellets of modified polypropylene (1).
The MFR and melt tension of the pellets of the modified polypropylene (1) were measured by the aforesaid methods, and the gel fraction thereof was calculated by the aforesaid method. The results are set forth in Table 1, in which a molecular weight distribution of the modified polypropylene (1) is also set forth for reference.

Examples 2 and 3

Modified polypropylene (2) and modified polypropylene (3) were obtained in the same manner as in Example 1, except that the amount of the peroxide was changed to each of 1.5 parts by weight and 0.5 part by weight. The results are set forth in Table 1.

Comparative Examples 1 and 2

Modified polypropylene (4) and modified polypropylene (5) were obtained in the same manner as in Example 1, except that each of a propylene homopolymer having MFR of 0.3 g/10 min (sometimes referred to as "polypropylene (b)" hereinafter) and a propylene homopolymer having MFR of 20 g/10 min (sometimes referred to as "polypropylene (c)" hereinafter) was used instead of the polypropylene (a). The properties of these modified polypropylene were measured in the same manner as in Example 1. The results are set forth in Table 1.

Comparative Example 3

Modified polypropylene (6) was obtained in the same manner as in Example 1, except that the amount of the peroxide was changed to 0.1 part by weight. The results are set forth in Table 1.

Comparative Example 4

Modified polypropylene (7) was obtained in the same manner as in Example 1, except that 2,5-dimethyl-

**EP 1 179 544 A1**

2,5-bis(t-butylperoxy)hexane (Perhexyne 25B, available from Nippon Oils & Fats Co., Ltd.) was used instead of the peroxide. The results are set forth in Table 1.

Table 1

| | | Ex. 1 | Ex. 2 | Ex. 3 | Comp. Ex.1 | Comp. Ex.2 | Comp. Ex. 3 | Comp. Ex. 4 |
|---|---|---|---|---|---|---|---|---|
| Starting Materials of modified polypropylene composition | Type of PP | (a)*1 | (a)*1 | (a)*1 | (b)*1 | (c)*1 | (a)*1 | (a)*1 |
| | Amount of PP (wt%) | 100 | 100 | 100 | 100 | 100 | 100 | 100 |
| | Type of Peroxide | (r-1)*2 | (r-1)*2 | (r-1)*2 | (r-1)*2 | (r-1)*2 | (r-1)*2 | (r-2)*2 |
| | Amount of Peroxide (wt%) | 1.0 | 1.5 | 0.5 | 1.0 | 1.0 | 0.1 | 0.1 |
| Properties of Modified polypropylene composition | MFR (g/ 10 min.) | 3.2 | 1.0 | 5.6 | 0.1 | 12 | 7.5 | 120 |
| | Mw/Mn | 5.6 | 5.8 | 5.6 | 5.6. | 4.8 | 5.4 | 2.2 |
| | Melt tension (g) | 12 | 16 | 10 | 18 | 6 | 4 | <0.1 |
| | Gel fraction (wt%) | 0.3 | 0.7 | 0.1 | 30 | 0 | 0 | |

*1 (a) : polypropylene(a) (MFR=8g/10 min)
(b) : polypropylene (b) (MFR=0.3g/10 min)
(c) : polypropylene (c) (MFR=20g/10 min)
*2 (r-1) : bis(4-t-butylcyclohexyl) peroxydicarbonate
(r-2) : 2,5-dimethyl-2,5-bis(t-butylperoxy)hexane

Example 4

100 Parts by weight of the pellets of the modified polypropylene (1) and 3 parts by weight of a blowing agent masterbatch (trade name: PE-RM410EN, available from Dainichi Seika K.K., sodium bicarbonate/citric acid blend) were mixed by a tumbling blender for 3 minutes. The mixture was molded by a 65 mm single-screw extruder (L/D = 28) equipped at the tip with a circular die (diameter: 80 mm) and a mandrel (diameter: 190 mm) to produce a tubular foamed sheet having a thickness of 0.8 mm. The swell ratio of the tubular foamed sheet in this production machine was 2.4. The tubular foamed sheet was cut open in one side and taken off as a flat sheet by a take-off mechanism.
The foamed sheet obtained was evaluated on the expansion ratio, appearance, shape of cell and formability (vacuum formability). The results are set forth in Table 2.

Examples 5 and 6, Comparative Examples 5, 6, 7 and 8

Foamed sheets having a thickness of 0.8 mm were produced in the same manner as in Example 4, except that the modified polypropylene (1) was replaced with each of the modified polypropylenes (2) to (7). The foamed sheets were evaluated in the same manner as in Example 4. The results are set forth in Table 2.
From the modified polypropylene (4), no sheet could be obtained because the resin pressure in the extrusion process was too high. From the modified polypropylene (7), no sheet could be obtained because the melt temperature of the resin was extremely lowered.

17

Table 2

| | Ex.4 | Ex.5 | Ex.6 | Comp. Ex.5 | Comp. Ex.6 | Comp. Ex.7 | Comp. Ex.8 |
|---|---|---|---|---|---|---|---|
| Modified polypropylene | (1) | (2) | (3) | (4) | (5) | (6) | (7) |
| Foamed sheet | | | | | | | |
| Expansion Ratio (times) | 1.9 | 1.8 | 1.9 | Incapable of molding | 1.5 | 1.3 | Incapable of molding |
| Appearance | A | A | A | | A | B | |
| Shape of cell | closed | closed | closed | | open | open | |
| Vacuum forming | | | | | | | |
| Shape | A | A | A | - | A | B | - |
| Appearance | B | B | C | - | D | E | - |

Example 7

100 Parts by weight of the polypropylene (a) and 1.0 part by weight of bis(4-t-butylcyclohexyl) peroxydicarbonate (trade name: Perkadox 16, available from KAYAKU AKZO K.K.) as a peroxide were melt kneaded by a twin-screw extruder of the same rotational direction perfect engagement type (KZW25-30MG, manufactured by Technovel K.K., screw diameter: 31 mm, L/D = 30) under the conditions of a resin temperature of 190°C and a screw rotational speed of 150 rpm (mean residence time: 30 seconds), and the kneadate was melt extruded to obtain pellets of modified polypropylene (8). The specific energy calculated was 0.35 kW·hr/kg.
The MFR, molecular weight distribution (Mw/Mn), Mz/Mw and melt tension of the pellets of the modified polypropylene (8) were measured or calculated. The results are set forth in Table 3.

Example 8

Modified polypropylene (9) was obtained in the same manner as in Example 7, except that the amount of the peroxide was changed to 0.5 part by weight. The results are set forth in Table 3.

Examples 9 and 10

Modified polypropylene (10) and modified polypropylene (11) were obtained in the same manner as in Example 7, except that the screw arrangement was changed so that the specific energy would be each of 0.25 kW·hr/kg and 0.4 kW·hr/kg. The results are set forth in Table 3.

Comparative Examples 9 and 10

Modified polypropylene (12) and modified polypropylene (13) were obtained in the same manner as in Example 7, except that the screw arrangement was changed so that the specific energy would be each of 0.15 kW·hr/kg and 1.0 kW·hr/kg. The results are set forth in Table 3.

Comparative Example 11

Modified polypropylene (14) was obtained in the same manner as in Example 7, except that 2,5-dimethyl-2,5-bis(t-butylperoxy)hexane (Perhexyne 25B, available from Nippon Oils & Fats Co., Ltd.) was used instead of the peroxide. The results are set forth in Table 3.

Table 3

| | | Ex. 7 | Ex. 8 | Ex. 9 | Ex. 10 | Comp. Ex. 9 | Comp. Ex. 10 | Comp. Ex. 11 |
|---|---|---|---|---|---|---|---|---|
| Melt kneading conditions | Amount of modified Polypropylene (wt%) | 100 | 100 | 100 | 100 | 100 | 100 | 100 |
| | Type of peroxide | (r-1)*2 | (r-1)*2 | (r-1)*2 | (r-1)*2 | (r-1)*2 | (r-1)*2 | (r-2)*2 |
| | Amount of peroxide (wt%) | 1.0 | 0.5 | 1.0 | 1.0 | 1.0 | 1.0 | 0.1 |
| | Specific energy(kW·hr/kg) | 0.35 | 0.35 | 0.25 | 0.4 | 0.15 | 1.0 | 0.35 |
| Properties | MFR (g/10 min) | 3.2 | 5.0 | 3.5 | 3.0 | 6.0 | 6 | 120 |
| | Mw/Mn | 5.6 | 5.8 | 5.6 | 5.6 | 5.4 | 5.3 | 2.2 |
| | Mz/Mw | 3.1 | 3.2 | 2.9 | 3.0 | 3.0 | 2.7 | 2.3 |
| | Melt tension (g) | 12 | 10 | 10 | 18 | 6 | 7 | <0.1 |
| | Gel fraction (wt%) | 0.7 | 0.1 | 0.5 | 0.5 | 0.1 | 0.5 | — |

*2  (r-1) : bis (4-t-butylcyclohexyl) peroxydicarbonate (r-2) : 2,5-dimethyl-2,5-bis (t-butylperoxy) hexane

EP 1 179 544 A1

Example 11

100 Parts by weight of the pellets of the modified polypropylene (8) and 3 parts by weight of a blowing agent masterbatch (trade name: PE-RM410EN, available from Dainichi Seika K.K., sodium bicarbonate/citric acid blend) were mixed by a tumbling blender for 3 minutes. The mixture was molded by a 65 mm single-screw extruder (L/D = 28) equipped at the tip with a circular die (diameter: 80 mm) and a mandrel (diameter: 190 mm) to produce a tubular foamed sheet having a thickness of 0.8 mm. The swell ratio of the tubular foamed sheet in this production machine was 2.4. The tubular foamed sheet was cut open in one side and taken off as a flat sheet by a take-off mechanism.
The foamed sheet obtained was evaluated on the expansion ratio, appearance, shape of cell, uniformity of cells and formability. The results are set forth in Table 4.

Examples 12, 13 and 14, Comparative Examples 12, 13 and 14

Foamed sheets having a thickness of 0.8 mm were produced in the same manner as in Example 11, except that the modified polypropylene (8) was replaced with each of the modified polypropylenes (9) to (14). The foamed sheets were evaluated in the same manner as in Example 11. The results are set forth in Table 4.

Table 4

| | | Ex. 11 | Ex. 12 | Ex. 13 | Ex. 14 |
|---|---|---|---|---|---|
| Modified polypropylene | | (8) | (9) | (10) | (11) |
| Foamed sheet | Expansion ratio (times) | 1.9 | 1.9 | 1.9 | 1.9 |
| | Apperance | A | A | A | A |
| | Uniformity of cell | closed | closed | closed | closed |
| Vacuum forming | Shape | A | A | A | A |
| | Appearance | B | C | C | B |
| | Uniformity of cells | A | B | A | A |

(continuation of table 4)

|  |  | Comp. Ex. 12 | Comp. Ex.13 | Comp Ex. 14 |
|---|---|---|---|---|
| Modified polypropylene |  | (12) | (13) | (14) |
| Foamed sheet | Expansion ratio (times) | 1.5 | 1.6 | incapable of molding |
|  | Apperance | A | B |  |
|  | Uniformity of cells | open | open |  |
| Vacuum forming | Shape | A | B | — |
|  | Appearance | D | D | — |
|  | Uniformity of Cells | C | C | — |

Example 15

100 Parts by weight of the polypropylene (a), 1.0 part by weight of bis(4-t-butylcyclohexyl) peroxydicarbonate (trade name: Perkadox 16, available from KAYAKU AKZO K.K.) and 0.02 part by weight of 2,5-dimethyl-2,5-bis(t-butylperoxy)hexane (trade name: Perhexa 25B, available from Nippon Oils & Fats, Co., Ltd.) were melt kneaded by a twin-screw extruder of the same rotational direction perfect engagement type (KZW25-30MG, manufactured by Technovel K.K., screw diameter: 31 mm, L/D = 30) under the conditions of a resin temperature of 190°C and a screw rotational speed of 150 rpm (mean residence time: 30 seconds), and the kneadate was melt extruded to obtain pellets of modified polypropylene (15).

The MFR and melt tension of the pellets of the modified polypropylene (15) were measured, and the gel fraction thereof was calculated. The results are set forth in Table 5, in which a molecular weight (Mw/Mn) of the polypropylene is also set forth for reference.

Example 16

Modified polypropylene (16) was obtained in the same manner as in Example 15, except that the amounts of bis(4-t-butylcyclohexyl) peroxydicarbonate and 2,5-dimethyl-2,5-bis(t-butylperoxy)hexane were changed to 0.8 part by weight and 0.01 part by weight, respectively. The results of properties of the modified polypropylene (16) are set forth in Table 5.

Reference Example 1

Modified polypropylene (17) was obtained in the same manner as in Example 15, except that 2,5-dimethyl-2,5-bis(t-butylperoxy)hexane (Perhexa 25B, available from Nippon Oils & Fats, Co., Ltd.) was not used. The results of properties of the modified polypropylene (17) are set forth in Table 5.

Table 5

|  | Ex. 15 | Ex. 16 | Ref. Ex. 1 |
|---|---|---|---|
| Amount of starting polypropylene (part(s) by weight) | 100 | 100 | 100 |
| Amount of crosslinking type peroxide (part(s) by weight) | 1.0 | 0.8 | 1.0 |
| Amount of decomposition type peroxide (part(s) by weight) | 0.02 | 0.01 | - |

Table 5   (continued)

|  |  | Ex. 15 | Ex. 16 | Ref. Ex. 1 |
|---|---|---|---|---|
| Modified polypropylene | MFR (g/10 min) | 8.0 | 7.0 | 3.2 |
|  | Mw/Mn | 2.7 | 3.2 | 5.6 |
|  | Melt tension (g) | 5 | 8 | 12 |
|  | Gel fraction (wt%) | 0.3 | 0.3 | 0.3 |

Example 17

100 Parts by weight of the pellets of the modified polypropylene (15) and 3 parts by weight of a blowing agent masterbatch (trade name: PE-RM410EN, available from Dainichi Seika K.K., sodium bicarbonate/citric acid blend) were mixed by a tumbling blender for 3 minutes. The mixture was molded by a 65 mm single-screw extruder (L/D = 28) equipped at the tip with a circular die (diameter: 80 mm) and a mandrel (diameter: 190 mm) to produce a tubular foamed sheet having a thickness of 0.8 mm. The swell ratio of the tubular foamed sheet in this production machine was 2.4. The tubular foamed sheet was cut open in one side and taken off as a flat sheet by a take-off mechanism.
The foamed sheet obtained was evaluated on the expansion ratio, appearance, shape of cell and formability (vacuum formability). The results are set forth in Table 6.

Example 18

A foamed sheet having a thickness of 0.8 mm was produced in the same manner as in Example 17, except that the modified polypropylene (16) was used instead of the modified polypropylene (15). The foamed sheet was evaluated in the same manner as in Example 17. The results are set forth in Table 6.

Reference Example 2

A foamed sheet having a thickness of 0.8 mm was produced in the same manner as in Example 17, except that the modified polypropylene (17) was used instead of the modified polypropylene (15). The foamed sheet was evaluated in the same manner as in Example 17. The results are set forth in Table 6.

Comparative Example 15

A foamed sheet having a thickness of 0.8 mm was produced in the same manner as in Example 17, except that the polypropylene (a) (MFR: 8.0 g/10 min, Mw/Mn: 5.6, melt tension: 0.7 g, gel fraction 0 wt%) was used instead of the modified polypropylene (15). The foamed sheet was evaluated in the same manner as in Example 17. Vacuum forming was impossible because of serious drawdown. The results are set forth in Table 6.

Table 6

|  |  | Ex. 17 | Ex. 18 | Ref. Ex. 2 | Comp. Ex. 15 |
|---|---|---|---|---|---|
| Modified polypropylene |  | (15) | (16) | (17) | Polypropylene (a) |
| Foamed sheet | Expansion ratio (times) | 1.9 | 1.9 | 1.9 | 1.1 |
|  | Appearance | A | A | A | B |
|  | Shape of cell | closed | closed | closed | - |
| Vacuum forming | Shape | A | A | A | - |
|  | Appearance | A | A | B | - |

Example 19

To a twin-screw extruder of the same rotational direction perfect engagement type (KZW25-30MG, manufactured by Technovel K.K., screw diameter: 31 mm, L/D = 30) having been so screw arranged as to have two kneading sections of a first kneading section and a second kneading section, 100 parts by weight of the polypropylene (a) and 1.0 part by weight of bis(4-t-butylcyclohexyl) peroxydicarbonate (trade name: Perkadox 16, available from KAYAKU AKZO K.K.) were fed through a hopper at a rate of 10 kg/hr.

On the other hand, a master powder obtained by diluting 2,5-dimethyl-2,5-bis(t-butylperoxy)hexane (trade name: Perhexyne 25B, available from Nippon Oils & Fats, Co., Ltd.) to 1/50 time with a propylene homopolymer (trade name: J104, available from Grand Polymer Co., Ltd.) was fed through a side feed opening provided at the intermediate position between the first kneading section and the second kneading section at a rate of 100 g/hr using an autofeeder. The components fed were melt kneaded under the conditions of a resin temperature of 190°C and a mean residence time of 30 seconds, and the kneadate was melt extruded to obtain pellets of modified polypropylene (18).

The MFR and melt tension of the pellets of the modified polypropylene (18) were measured, and the gel fraction thereof was calculated. The results are set forth in Table 7, in which a molecular weight (Mw/Mn) of the polypropylene is also set forth for reference.

## Example 20

Modified polypropylene (19) was obtained in the same manner as in Example 19, except that the amount of bis(4-t-butylcyclohexyl) peroxydicarbonate was changed to 0.8 part by weight and the feed rate of 2,5-dimethyl-2,5-bis (t-butylperoxy)hexane was changed to 50 g/hr. The results of properties of the modified polypropylene (19) are set forth in Table 7.

## Reference Example 3

Modified polypropylene (20) was obtained in the same manner as in Example 19, except that side feed of the 2,5-dimethyl-2,5-bis(t-butylperoxy)hexane was not carried out. The results of properties of the modified polypropylene (20) are set forth in Table 7.

Table 7

| | | Ex. 19 | Ex. 20 | Ref. Ex. 3 |
|---|---|---|---|---|
| Hopper feed | Starting polypropylene (part(s) by weight) | 100 | 100 | 100 |
| | Crosslinking type peroxide (part(s) by weight) | 1.0 | 0.8 | 1.0 |
| | Feed rate (kg/hr) | 10 | 10 | 10 |
| Side feeder feed | Feed rate of master powder(g/hr) | 100 | 50 | - |
| Modified Polypropylene | MFR (g/10 min) | 6.8 | 5.6 | 3.2 |
| | Mw/Mn | 2.6 | 3.0 | 5.6 |
| | Melt tension (g) | 5.5 | 7 | 12 |
| | Gel fraction (wt%) | 0.4 | 0.4 | 0.3 |

## Example 21

100 Parts by weight of the pellets of the modified polypropylene (18) and 3 parts by weight of a blowing agent masterbatch (trade name: PE-RM410EN, available from Dainichi Seika K.K., sodium bicarbonate/citric acid blend) were mixed by a tumbling blender for 3 minutes. The mixture was molded by a 65 mm single-screw extruder (L/D = 28) equipped at the tip with a circular die (diameter: 80 mm) and a mandrel (diameter: 190 mm) to produce a tubular foamed sheet having a thickness of 0.8 mm. The swell ratio of the tubular foamed sheet in this production machine was 2.4. The tubular foamed sheet was cut open in one side and taken off as a flat sheet by a take-off mechanism.

The foamed sheet obtained was evaluated on the expansion ratio, appearance, shape of cell and formability (vacuum formability). The results are set forth in Table 8.

## Example 22

A foamed sheet having a thickness of 0.8 mm was produced in the same manner as in Example 21, except that the modified polypropylene (19) was used instead of the modified polypropylene (18). The foamed sheet was evaluated in the same manner as in Example 21. The results are set forth in Table 8.

## EP 1 179 544 A1

Reference Example 4

A foamed sheet having a thickness of 0.8 mm was produced in the same manner as in Example 21, except that the modified polypropylene (20) was used instead of the modified polypropylene (18). The foamed sheet was evaluated in the same manner as in Example 21. The results are set forth in Table 8.

Table 8

|  |  | Ex. 21 | Ex. 22 | Ref. 4 Ex. 4 | Comp. Ex. 15 |
|---|---|---|---|---|---|
| Modified polypropylene |  | (18) | (19) | (20) | Polypropylene (a) |
| Foamed sheet | Expansion ratio (times) | 1.8 | 1.7 | 1.9 | 1.1 |
|  | Appearance | A | A | A | B |
|  | Shape of cell | closed | closed | closed | - |
| Vacuum forming | Shape | A | A | A | - |
|  | Appearance | A | A | B | - |

Example 23

Preparation of modified polypropylene

100 Parts by weight of a propylene homopolymer (trade name: J103, available from Grand Polymer Co., Ltd., MFR: 5.0 g/10 min, sometimes referred to as "polypropylene (d)" hereinafter) and 1.0 part by weight of bis(4-t-butylcyclohexyl) peroxydicarbonate (trade name: Perkadox 16, available from KAYAKU AKZO K.K.) as a peroxide were melt kneaded by a twin-screw extruder of the same rotational direction perfect engagement type (KZW25-30MG, manufactured by Technovel K.K., screw diameter: 31 mm, L/D = 30) under the conditions of a resin temperature of 190°C and a screw rotational speed of 150 rpm (mean residence time: 30 seconds), and the kneadate was melt extruded to obtain pellets of modified polypropylene (21).
The MFR, molecular weight distribution (Mw/Mn), Mz/Mw, melt tension and gel fraction of the pellets of the modified polypropylene (21) were measured or calculated. The results are set forth in Table 9.

Preparation of modified polypropylene composition

80 Parts by weight of the pellets of the modified polypropylene (21) and 20 parts by weight of pellets of a propylene homopolymer (trade name: F122, available from Grand Polymer Co., Ltd., MFR: 2.5 g/10 min, sometimes referred to as "polypropylene (e)" hereinafter) were mixed by a tumbling blender, and the mixture was granulated by a 65 mm single-screw extruder to obtain a modified polypropylene composition (1). The evaluation results of the modified polypropylene composition (1) are set forth in Table 9.

Example 24

A modified polypropylene composition (2) was obtained in the same manner as in Example 23, except that the amounts of the modified polypropylene (21) and the polypropylene (e) were changed to 90 parts by weight and 10 parts by weight, respectively. The evaluation results of the modified polypropylene composition (2) are set forth in Table 10.

Example 25

Preparation of modified polypropylene

Pellets of modified polypropylene (22) were prepared in the same manner as in Example 23, except that the polypropylene (e) was used instead of the polypropylene (d).
The properties of the pellets of the modified polypropylene (22) were measured or calculated in the same manner as in Example 23. The results are set forth in Table 9.

24

Preparation of modified polypropylene composition

A modified polypropylene composition (3) was obtained in the same manner as in Example 23, except that the modified polypropylene (22) was used as modified polypropylene. The evaluation results of the modified polypropylene composition (3) are set forth in Table 10.

Table 9

|  | Ex. 23 | Ex. 25 |
|---|---|---|
| Modified polypropylene | (21) | (22) |
| Amount of starting polypropylene (wt%) | 100 | 100 |
| Amount of peroxide (wt%) | 1.0 | 1.0 |
| MFR (g/10 min) | 1.5 | 0.5 |
| Mw/Mn | 5.7 | 5.8 |
| Mz/Mw | 3.3 | 3.3 |
| Melt tension (g) | 14 | 16 |
| Gel fraction (wt%) | 0.3 | 0.7 |

Table 10

|  | Ex. 23 | Ex. 24 | Ex. 25 |
|---|---|---|---|
| Modified polypropylene Composition | (1) (1) | (2) (2) | (3) (3) |
| Polypropylene (wt%) | 20 | 10 | 20 |
| Type of modifed polypropylene (wt%) | (21) 80 | (21) 90 | (22) 80 |
| MFR (g/10 min) | 1.8 | 1.6 | 0.8 |
| Melt tension (g) | 8 | 11 | 13 |

Example 26

100 Parts by weight of the pellets of the modified polypropylene composition (1) and 3 parts by weight of a blowing agent masterbatch (trade name: PE-RM410EN, available from Dainichi Seika K.K., sodium bicarbonate/citric acid blend) were mixed by a tumbling blender for 3 minutes. The mixture was molded by a 65 mm single-screw extruder (L/D = 28) equipped at the tip with a circular die (diameter: 80 mm) and a mandrel (diameter: 190 mm) to produce a tubular foamed sheet having a thickness of 0.8 mm. The swell ratio of the tubular foamed sheet in this production machine was 2.4. The tubular foamed sheet was cut open in one side and taken off as a flat sheet by a take-off mechanism.

The foamed sheet obtained was evaluated on the expansion ratio, appearance, shape of cell and formability. The results are set forth in Table 11.

In this example, the sheet appearance was visually observed, and the smoothness and the thickness evenness of the sheet were evaluated based on the following criteria.

A: The surface smoothness is high and the thickness evenness is good.

B: Any one of the smoothness and the thickness evenness is slightly bad.

C: Neither the smoothness nor the thickness evenness is bad.

Examples 27 and 28

Foamed sheets having a thickness of 0.8 mm were produced in the same manner as in Example 26, except that the modified polypropylene composition (1) was replaced with each of the modified polypropylene (2) and the modified polypropylene (3). The foamed sheets were evaluated in the same manner as in Example 26. The results are set forth in Table 11.

Reference Example 5

A foamed sheet having a thickness of 0.8 mm was produced in the same manner as in Example 26, except that the modified polypropylene (21) was used instead of the modified polypropylene composition (1). The foamed sheet was evaluated in the same manner as in Example 26. The results are set forth in Table 11.

Reference Example 6

A foamed sheet having a thickness of 0.8 mm was produced in the same manner as in Example 26, except that the modified polypropylene (22) was used instead of the modified polypropylene composition (1). The foamed sheet was evaluated in the same manner as in Example 26. The results are set forth in Table 11.

Table 11

|  |  | Ex. 26 | Ex. 27 | Ex. 28 | Ref. Ex. 5 | Ref. Ex. 6 |
|---|---|---|---|---|---|---|
| Foamed sheet | Expansion Ratio (times) | 1.8 | 1.9 | 1.9 | 2.0 | 1.8 |
|  | Appearance | A | A | A | B | B |
|  | Shape of cell | Closed | closed | Slightly closed | closed | Slightly closed |
| Vacuum forming | Shape | A | A | A | A | A |
|  | Appearance | A | B | A | C | C |

Example 29

Preparation of modified polypropylene

100 Parts by weight the polypropylene (a) and 1.0 part by weight of bis(4-t-butylcyclohexyl) peroxydicarbonate (trade name: Perkadox 16, available from KAYAKU AKZO K.K.) were melt kneaded by a twin-screw extruder of the same rotational direction perfect engagement type (KZW25-30MG, manufactured by Technovel K.K., screw diameter: 31 mm, L/D = 30) under the conditions of a resin temperature of 190°C and a screw rotational speed of 150 rpm (mean residence time: 30 seconds), and the kneadate was melt extruded to obtain pellets of modified polypropylene (23).
The MFR, Mw/Mn and melt tension of the pellets of the modified polypropylene (23) were measured, and the gel fraction thereof was calculated. As a result, the MFR was 3.2 g/10 min, Mw/Mn was 5.6, the melt tension was 12 g, and the gel fraction was 0.3 wt%.

Preparation of modified polypropylene composition

90 Parts by weight of the pellets of the modified polypropylene (23) obtained above and 10 parts by weight of pellets of high-pressure low-density polyethylene (trade name: F102, available from Mitsui Chemicals, Inc., MFR: 0.5 g/10 min, sometimes referred to as "LDPE" hereinafter) were mixed by a tumbling blender, and the mixture was granulated by a 65 mm single-screw extruder to obtain a modified polypropylene composition (4). The evaluation results of the modified polypropylene composition (4) are set forth in Table 12.

Example 30

A modified polypropylene composition (5) was obtained in the same manner as in Example 29, except that the amounts of the modified polypropylene (23) and the high-pressure low-density polyethylene were changed to 80 parts by weight and 20 parts by weight, respectively. The evaluation results of the modified polypropylene composition (5) are set forth in Table 12.

Comparative Example 16

A modified polypropylene composition (6) was obtained in the same manner as in Example 29, except that 2,5-dimethyl-2,5-bis(t-butylperoxy)hexane (Perhexa 25B, available from Nippon Oils & Fats Co., Ltd.) was used instead of bis(4-t-butylcyclohexyl) peroxydicarbonate. The results are set forth in Table 12.

Table 12

|  | Ex. 29 | Ex. 30 | Comp. Ex. 16 |
|---|---|---|---|
| Modified polypropylene Composition | (4) | (5) | (6) |
| Amount of LDPE (Wt%) | 10 | 20 | 10 |
| MFR (g/10 min) | 2.8 | 2.0 | 100 |
| Mw/Mn | - | - | 2.2 |
| Melt tension (g) | 14 | 15 | <0.1 |
| Gel fraction (wt%) | 0.5 | 0.6 | - |

Example 31

100 Parts by weight of the pellets of the modified polypropylene composition (4) and 3 parts by weight of a blowing agent masterbatch (trade name: PE-RM410EN, available from Dainichi Seika K.K., sodium bicarbonate/citric acid blend) were mixed by a tumbling blender for 3 minutes. The mixture was molded by a 65 mm single-screw extruder (L/D = 28) equipped at the tip with a circular die (diameter: 80 mm) and a mandrel (diameter: 190 mm) to produce a tubular foamed sheet having a thickness of 0.8 mm. The swell ratio of the tubular foamed sheet in this production machine was 2.4. The tubular foamed sheet was cut open in one side and taken off as a flat sheet by a take-off mechanism.
The foamed sheet obtained was evaluated on the expansion ratio, appearance, shape of cell and formability (vacuum formability). The results are set forth in Table 13.

Example 32

A foamed sheet having a thickness of 0.8 mm was produced in the same manner as in Example 31, except that the modified polypropylene composition (4) was replaced with the modified polypropylene composition (5). The foamed sheet was evaluated in the same manner as in Example 31. The results are set forth in Table 13.

Reference Example 7

The procedure of Example 31 was repeated except for using the modified polypropylene (23) instead of the modified polypropylene composition (4). The results are set forth in Table 13.

Comparative Example 17

The procedure of Example 31 was repeated except for using the modified polypropylene composition (6) instead of the modified polypropylene composition (4). However, molding was impossible because of serious drawdown.

Table 13

|  |  | Ex. 31 | Ex. 32 | Ref. Ex. 7 | Comp. Ex. 17 |
|---|---|---|---|---|---|
| Modified polypropylene composition |  | (4) | (5) | Modified polypropylene (23) | (6) |
| Foamed sheet | Expansion ratio (times) | 2.2 | 2.1 | 1.9 | Incapable |
|  | Appearance | A | A | A | of molding |
|  | Shape of cell | closed | closed | closed |  |
| Vacuum forming | Shape | A | A | A | - |
|  | Appearance | A | A | B | - |

**Claims**

1.   Modified polypropylene (A1) having a melt flow rate (ASTM D1238, 230°C, load of 2.16 kg) of 0.1 to 10 g/10 min, a melt tension of 3 to 20 g and a gel fraction, as determined by boiling paraxylene extraction, of 0.01 to 25 % by weight.

2. The modified polypropylene (A1) as claimed in claim 1, which is obtainable by melt kneading 98.5 to 99.7 % by weight of polypropylene (B1) having a melt flow rate of 0.4 to 15 g/10 min and 0.3 to 1.5 % by weight of a peroxydicarbonate (C) at a temperature of 170 to 250°C.

3. The modified polypropylene (A1) as claimed in claim 2, wherein the peroxydicarbonate (C) is bis(4-t-butylcyclohexyl) peroxydicarbonate.

4. The modified polypropylene (A1) as claimed in claim 2, wherein the peroxydicarbonate (C) is dicetyl peroxydicarbonate.

5. A process for preparing modified polypropylene (A2), comprising melt kneading polypropylene (B2) and a peroxydicarbonate (C) using an extruder at a temperature of 170 to 250°C in such a manner that the specific energy $(E_{SP})$ becomes 0.25 to 0.8 kW·hr/kg to prepare modified polypropylene (A2) having a melt flow rate (ASTM D1238, 230°C, load of 2.16 kg) of 0.1 to 10 g/10 min, a melt tension of 3 to 20 g and a gel fraction, as determined by boiling paraxylene extraction, of 0.01 to 25 % by weight.

6. The process for preparing modified polypropylene (A2) as claimed in claim 5, wherein the extruder is a twin-screw extruder.

7. The process for preparing modified polypropylene (A2) as claimed in claim 6, wherein at least one kneading section is provided in the screw arrangement of the twin-screw extruder.

8. The process for preparing modified polypropylene (A2) as claimed in any one of claims 5 to 7, wherein the peroxydicarbonate (C) is bis(4-t-butylcyclohexyl) peroxydicarbonate.

9. The process for preparing modified polypropylene (A2) as claimed in any one of claims 5 to 7, wherein the peroxydicarbonate (C) is dicetyl peroxydicarbonate.

10. A process for preparing modified polypropylene (A3), comprising melt kneading polypropylene (B1), a polypropylene crosslinking type peroxide (D) and a polypropylene decomposition type peroxide (E) at a temperature of 160 to 250°C.

11. The process for preparing modified polypropylene (A3) as claimed in claim 10, wherein the polypropylene crosslinking type peroxide (D) is a peroxydicarbonate.

12. The process for preparing modified polypropylene (A3) as claimed in claim 11, wherein the peroxydicarbonate is bis(4-t-butylcyclohexyl) peroxydicarbonate.

13. The process for preparing modified polypropylene (A3) as claimed in claim 11, wherein the peroxydicarbonate is dicetyl peroxydicarbonate.

14. The process for preparing modified polypropylene (A3) as claimed in any one of claims 10 to 13, wherein the polypropylene decomposition type peroxide (E) is a dialkyl peroxide.

15. The process for preparing modified polypropylene (A3) as claimed in claim 14, wherein the dialkyl peroxide is 2,5-dimethyl-2,5-bis(t-butylperoxy)hexane.

16. A process for preparing modified polypropylene (A4), comprising melt kneading polypropylene (B1) and a polypropylene crosslinking type peroxide (D) at a temperature of 160 to 250°C and then melt kneading the resulting kneadate and a polypropylene decomposition type peroxide (E) at a temperature of 160 to 250°C.

17. The process for preparing modified polypropylene (A4) as claimed in claim 16, wherein the polypropylene crosslinking type peroxide (D) is a peroxydicarbonate.

18. The process for preparing modified polypropylene (A4) as claimed in claim 17, wherein the peroxydicarbonate is bis(4-t-butylcyclohexyl) peroxydicarbonate.

19. The process for preparing modified polypropylene (A4) as claimed in claim 17, wherein the peroxydicarbonate is dicetyl peroxydicarbonate.

20. The process for preparing modified polypropylene (A4) as claimed in any one of claims 16 to 19, wherein the polypropylene decomposition type peroxide (E) is a dialkyl peroxide.

21. The process for preparing modified polypropylene (A4) as claimed in claim 20, wherein the dialkyl peroxide is 2,5-dimethyl-2,5-bis(t-butylperoxy)hexane.

22. A modified polypropylene composition (F1) comprising:

    (B3) polypropylene, and
    (A1) the modified polypropylene of any one of claims 1 to 4,

    wherein the polypropylene (B3) is contained in an amount of 1 to 99 % by weight and the modified polypropylene (A1) is contained in an amount of 99 to 1 % by weight, the total of said components (A1) and (B3) being 100 % by weight.

23. A modified polypropylene composition (F2) comprising:

    (G) high-pressure low-density polyethylene, and
    (A1) the modified polypropylene of any one of claims 1 to 4,

    wherein the high-pressure low-density polyethylene (G) is contained in an amount of 50 to 1 % by weight and the modified polypropylene (A1) is contained in an amount of 50 to 99 % by weight, the total of said components (G) and (A1) being 100 % by weight.

24. A foamed product obtainable from the modified polypropylene (A1) of any one of claims 1 to 4.

25. A foamed product obtainable from the modified polypropylene (A2) prepared by the process of any one of claims 5 to 9.

26. A foamed product obtainable from the modified polypropylene (A3) prepared by the process of any one of claims 10 to 15.

27. A foamed product obtainable from the modified polypropylene (A4) prepared by the process of any one of claims 16 to 21.

28. A foamed product obtainable from the modified polypropylene composition (F1) of claim 22.

29. A foamed product obtainable from the modified polypropylene composition (F2) of claim 23.

**European Patent Office**

## EUROPEAN SEARCH REPORT

Application Number

EP 01 11 8823

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | WO 99 27007 A (AKZO NOBEL N.V.) 3 June 1999 (1999-06-03) * page 2, line 16 - line 28 * * page 3, line 6 - line 12 * * page 4, line 6 - line 23 * * page 5, line 18 - page 6, line 15 * * page 7, line 28 - page 9, line 2; claims 1-14 * | 1-29 | C08F8/00 C08K5/14 |
| Y | WO 00 00520 A (BOREALIS A/S) 6 January 2000 (2000-01-06) * page 3, line 15 - line 37 * * page 4, line 24 - line 35 * * page 6, line 34 - page 7, line 29 * * page 8, line 16 - page 9, line 28; claims 1-15 * | 1-29 | |
| Y | EP 0 879 844 A (PCD POLYMERE AG) 25 November 1998 (1998-11-25) * column 3, line 32 - column 4, line 29; claims 1-10 * | 1-29 | |
| A | WO 97 49759 A (AKZO NOBEL N.V.) 31 December 1997 (1997-12-31) * page 3, line 12 - page 5, line 16 * * page 9, line 11 - line 24; claims 1-22 * | 1 | TECHNICAL FIELDS SEARCHED (Int.Cl.7) C08F C08K |
| A | WO 97 32922 A (THE DOW CHEMICAL COMPANY) 12 September 1997 (1997-09-12) * claims 1-14 * | 1 | |
| A | EP 0 497 590 A (MITSUBISHI PETROCHEMICAL CO., LTD) 5 August 1992 (1992-08-05) * page 6, line 1 - line 28 * * page 7, line 4 - line 8; claims 1-18 * | 1 | |

The present search report has been drawn up for all claims

| Place of search | Date of completion of the search | Examiner |
|---|---|---|
| THE HAGUE | 30 November 2001 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 11 8823

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2001

| Patent document cited in search report | | Publication date | Patent family member(s) | | Publication date |
|---|---|---|---|---|---|
| WO 9927007 | A | 03-06-1999 | AU | 1669399 A | 15-06-1999 |
| | | | BG | 104453 A | 31-01-2001 |
| | | | BR | 9814682 A | 03-10-2000 |
| | | | CN | 1279700 T | 10-01-2001 |
| | | | WO | 9927007 A1 | 03-06-1999 |
| | | | EP | 1034213 A1 | 13-09-2000 |
| | | | HU | 0100007 A2 | 28-05-2001 |
| | | | NO | 20002586 A | 19-05-2000 |
| | | | PL | 340565 A1 | 12-02-2001 |
| | | | SK | 7312000 A3 | 07-11-2000 |
| | | | TR | 200001396 T2 | 21-09-2000 |
| | | | TW | 426600 B | 21-03-2001 |
| | | | ZA | 9810274 A | 10-05-1999 |
| WO 0000520 | A | 06-01-2000 | NO | 982882 A | 20-12-1999 |
| | | | AU | 5657699 A | 17-01-2000 |
| | | | WO | 0000520 A1 | 06-01-2000 |
| EP 879844 | A | 25-11-1998 | DE | 19720975 A1 | 26-11-1998 |
| | | | EP | 0879844 A1 | 25-11-1998 |
| | | | US | 6225366 B1 | 01-05-2001 |
| WO 9749759 | A | 31-12-1997 | AT | 198608 T | 15-01-2001 |
| | | | AU | 713948 B2 | 16-12-1999 |
| | | | AU | 3258497 A | 14-01-1998 |
| | | | BR | 9709941 A | 10-08-1999 |
| | | | CA | 2258954 A1 | 31-12-1997 |
| | | | DE | 69703886 D1 | 15-02-2001 |
| | | | DE | 69703886 T2 | 21-06-2001 |
| | | | DK | 907677 T3 | 21-05-2001 |
| | | | WO | 9749759 A1 | 31-12-1997 |
| | | | EP | 0907677 A1 | 14-04-1999 |
| | | | ES | 2154047 T3 | 16-03-2001 |
| | | | HU | 9903593 A2 | 28-07-2000 |
| | | | IL | 127700 A | 19-03-2001 |
| | | | JP | 2000516272 T | 05-12-2000 |
| | | | NO | 986102 A | 23-12-1998 |
| | | | PL | 330900 A1 | 07-06-1999 |
| | | | PT | 907677 T | 29-06-2001 |
| | | | TR | 9802604 T2 | 22-03-1999 |
| WO 9732922 | A | 12-09-1997 | AT | 206445 T | 15-10-2001 |
| | | | AU | 712018 B2 | 28-10-1999 |
| | | | AU | 1976597 A | 22-09-1997 |
| | | | BR | 9707803 A | 27-07-1999 |
| | | | CA | 2244999 A1 | 12-09-1997 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 01 11 8823

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2001

| Patent document cited in search report | | Publication date | Patent family member(s) | | Publication date |
|---|---|---|---|---|---|
| WO 9732922 | A | | CN | 1212714 A ,B | 31-03-1999 |
| | | | DE | 69707107 D1 | 08-11-2001 |
| | | | EP | 0885255 A2 | 23-12-1998 |
| | | | JP | 2000506210 T | 23-05-2000 |
| | | | NO | 984086 A | 04-11-1998 |
| | | | PL | 328725 A1 | 15-02-1999 |
| | | | TR | 9700163 A2 | 21-09-1997 |
| | | | WO | 9732922 A2 | 12-09-1997 |
| | | | US | 6114486 A | 05-09-2000 |
| | | | ZA | 9701859 A | 04-09-1998 |
| EP 497590 | A | 05-08-1992 | JP | 3016880 B2 | 06-03-2000 |
| | | | JP | 4348113 A | 03-12-1992 |
| | | | DE | 69219917 D1 | 03-07-1997 |
| | | | DE | 69219917 T2 | 18-09-1997 |
| | | | EP | 0497590 A2 | 05-08-1992 |
| | | | KR | 179039 B1 | 15-05-1999 |
| | | | US | 5231144 A | 27-07-1993 |

For more details about this annex : see Official Journal of the European Patent Office, No. 12/82